# EUROPEAN PATENT SPECIFICATION

(11) **EP 2 298 423 B1**
(45) Date of publication and mention of the grant of the patent: **18.07.2018**
(21) Application number: 10178921.2
(22) Date of filing: 30.10.2003
(51) Int. Cl.: A63F 13/213

(54) **Clothes with tracking marks for computer games**
Kleidungsstücke mit verfolgung für videospiele
Vêtements avec marques de suivi pour jeux vidéos

(30) Priority: 30.10.2002 US 286396; 17.04.2003 US 463825 P
(43) Date of publication of application: 23.03.2011
(62) Divisional of application: 10150066.8
(73) Proprietor: NIKE Innovate C.V., Beaverton, OR 97005-6453 (US)
(72) Inventor: Shum, Albert, Portland, OR 97210 (US); Foxen, Thomas, Portland, OR 97219 (US); Meschter, James, Portland, OR 97239 (US); Behar, Yves, Oakland, CA 94611 (US)
(74) Representative: Haseltine Lake LLP

(56) References cited:
- WO-A1-01/71397
- WO-A2-00/31560
- US-A- 5 982 352
- US-A- 6 128 783
- US-A1- 2002 083 507
- GUSKOV I: "Efficient tracking of regular patterns on non-rigid geometry", PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 2, 11 August 2002 (2002-08-11), pages 1057-1060, XP010614062, DOI: DOI:10.1109/ICPR.2002.1048487 ISBN: 978-0-7695-1695-0

## Description

### FIELD OF THE INVENTION

The invention relate to the use of tracking targets that can be worn and detected for identifying a wearer or tracking a wearer's movement. Various aspects of the invention may be particularly applicable for use with interactive gaming or training devices, where the operation of the device is controlled in response to the wearer's movements. Various aspects of the invention may also be used to associate information with the wearer.

### BACKGROUND OF THE INVENTION

In recent years, the sophistication and capability of computers has steadily increased. As the capability of computers has increased, virtual reality devices that provide feedback based upon the identification of a user or the detection of a user's physical movements have grown in popularity. These devices, referred to herein as interactive activity devices, include, for example, interactive electronic games in which a user may move his or her arms, legs, head or entire body location in order to accomplish the goals of the game. Interactive activity devices also include interactive electronic training devices, which are used to improve desired skills for a wide variety of athletes or job workers. For example, with some types of interactive electronic training devices, a user may practice a particular movement of a body part, and receive feedback in response to indicate whether the user is moving in the desired manner.

While interactive activity devices are growing in popularity, however, the tools employed by a user to use these devices are still fairly primitive. Thus, many interactive activity devices require that a user wear an unwieldy, and sometimes uncomfortable, accessory that will allow the device to track the position of the user. For example, some interactive activity devices require that a player wear a belt with a prominent reflective the disk in front for reflecting infrared waves. WO01/71397 discloses a human-computer interaction system using two retro-reflective markers worn on fingertips. One of the markers has specific pattern, shape, or colour to identify the user. The second one can be hidden away from the camera, to trigger an additional interaction. The markers can be worn on garment.

### BRIEF SUMMARY OF THE INVENTION

The invention is defined in the attached independent claims to which reference should now be made. Further, optional features may be found in the sub-claims appended thereto.

Advantageously, various examples of the invention provide tracking targets that can be conveniently and comfortably employed by the user of an interactive activity device, and yet may still accurately be detected by an interactivity device. Some examples of the invention employ apparel that includes tracking targets in the form of tracking marks displayed on the apparel. The apparel may be convertible from one form, in which the tracking marks are partially or completely hidden, to another form, in which the tracking marks are prominently displayed for detecting by an interactive activity device. Alternately or additionally, the apparel may include tracking targets in the form of tracking marks made from material that appears highly reflective to an interactive activity device, but which does not appear highly reflective to a casual observer.

Still other examples of the invention may include apparel with electronic targets for detecting a user's movement. For example, the apparel may be footwear with accelerometers to indicate when a user has stepped upon a surface, the degree of pressure applied by the footwear against a surface, or both. Also, some types of electronic targets may transmit an electromagnetic signal, such as a light, infrared or ultrasound signal, to indicate their position (and the position of a user's body part) to an interactive activity device. Still further, some electronic targets may determine their position using, for example, radio triangulation, and then transmit their position (and the position of a user's body part) to an interactive activity device.

### BRIEF DESCRIPTION OF THE DRAWINGS

The foregoing summary of the invention, as well as the following detailed description of preferred embodiments, is better understood when read in conjunction with the accompanying drawings, which are included by way of example, and not by way of limitation with regard to the claimed invention.
Figure 1 illustrates apparel employing tracking marks according to one embodiment of the invention.
Figure 2 illustrates the use of the apparel illustrated in Figure I with an interactive computer game.
Figure 3A is a front elevational view of apparel, particularly a shirt bearing tracking marks, according to another embodiment of the invention, the apparel being in a concealed configuration.
Figure 3B is a first partial perspective view of a sleeve of the apparel depicted in Figure 3A, the apparel being in a concealed configuration.
Figure 3C is a second partial perspective view of a sleeve of the apparel depicted in Figure 3A, the apparel being in an exposed configuration.
Figure 4 is a front elevational view of apparel, particularly a shirt bearing tracking marks, according to yet another embodiment of the invention.
Figure 5A is a front elevational view of apparel, particularly a shirt bearing tracking marks, according to another embodiment of the invention.
Figure 5B is a first partial perspective view of a sleeve of the apparel depicted in Figure 5A, the apparel being in a concealed configuration.
Figure 5C is a second partial perspective view of a sleeve of the apparel depicted in Figure 5A, the apparel being in an exposed configuration.
Figure 5D is a front elevational view of apparel, particularly a pair of pants bearing tracking marks, according to another embodiment of the invention.
Figure 6A is a first front elevational view of apparel, particularly a shirt bearing tracking marks, according to yet another embodiment of the invention, the apparel being in a concealed configuration.
Figure 6B is a second front elevational view of the apparel depicted in Figure 6A, the apparel being in an exposed configuration.
Figure 6C is a first front elevational view of apparel, particularly a pair of pants bearing tracking marks, according to another embodiment of the invention, the apparel being in a concealed configuration.
Figure 6D is a second front elevational view of the apparel depicted in Figure 6C, one leg portion of the apparel being in an exposed configuration.
Figure 7A is a front elevational view of. two types of apparel, particularly a shirt bearing tracking marks and a pair of pants bearing tracking marks, according to yet another embodiment of the invention, the apparel being in a concealed configuration.
Figure 7B is a first partial perspective view of a sleeve of the apparel depicted in Figure 7A, the apparel being in the concealed configuration.
Figure 7C is a second partial perspective view of the sleeve of the apparel depicted in Figure 7A, the apparel being in an exposed configuration.
Figure 8A is a front elevational view of apparel, particularly a dress bearing tracking marks, according to another embodiment of the invention, the apparel being in a concealed configuration.
Figure 8B is a perspective view of the apparel depicted in Figure 8A, the apparel being in an exposed configuration.
Figure 9A is a first front elevational view of apparel, particularly a shirt bearing tracking marks, according to yet another embodiment of the invention, the apparel being in a concealed configuration.
Figure 9B is a first partial perspective view of a sleeve of the apparel depicted in Figure 9A, the apparel being in the concealed configuration.
Figure 9C is a second partial perspective view of the sleeve of the apparel depicted in Figure 9A.
Figure 9D is a third partial perspective view of the sleeve of the apparel depicted in Figure 9A, the apparel being in an exposed configuration.
Figure 9E is a second front elevational view of the apparel depicted in Figure 9A, the apparel being in the exposed configuration.
Figure 10A is a first front elevational view of apparel, particularly a shirt bearing tracking marks, according to yet another embodiment of the invention, the apparel being in a concealed configuration.
Figure 10B is a first partial perspective view of a sleeve of the apparel depicted in Figure 10A, the apparel being in the concealed configuration.
Figure 10C is a second partial perspective view of the sleeve of the apparel depicted in Figure 10A.
Figure 10D is a third partial perspective view of the sleeve of the apparel depicted in Figure 10A, the apparel being in an exposed configuration.
Figure 10E is a second front elevational view of the apparel depicted in Figure 10A, the apparel being in the exposed configuration.
Figure 11A is a front elevational view of apparel, particularly a shirt bearing tracking marks, according to yet another embodiment of the invention, the apparel being in a concealed configuration.
Figure 11B is a front elevational view of the apparel depicted in Figure 11A, the apparel being in an exposed configuration.
Figure 12A is a front elevational view of two types of apparel, particularly a shirt bearing tracking marks and a pair of pants bearing tracking marks, according to yet another embodiment of the invention, the two types of apparel being in a concealed configuration.
Figure 12B is a front elevational view of the two types of apparel depicted in Figure 12A, the two types of apparel being in an exposed configuration.
Figure 13A is a first front elevational view of apparel, particularly a shirt bearing tracking marks, according to yet another embodiment of the invention, the apparel being in a concealed configuration.
Figure 13B is a second front elevational view of the apparel depicted in Figure 13A, one sleeve of the apparel being in an exposed configuration.
Figure 13C is a first front elevational view of apparel, particularly a pair of pants bearing tracking marks, according to another embodiment of the invention, the apparel being in a concealed configuration.
Figure 13D is a second front elevational view of the apparel depicted in Figure 13C, one leg portion of the apparel being in an exposed configuration.
Figure 14A is a perspective view of two types of apparel, particularly a shirt bearing tracking marks and a pair of pants bearing tracking marks, according to yet another embodiment of the invention.
Figure 14B is a partial perspective view of a sleeve of the apparel depicted in Figure 14A, the sleeve being in an exposed configuration.
Figure 14C is a partial perspective view of a leg portion of the apparel depicted in Figure 14A, the leg portion being in an exposed configuration.
Figure 15A is a front elevational view of apparel, particularly a shirt bearing tracking marks, according to yet another embodiment of the invention.
Figure 15B is a first partial perspective view of a sleeve of the apparel depicted in Figure 15A, the apparel being in a concealed configuration.
Figure 15C is a second partial perspective view of the sleeve of the apparel depicted in Figure 15A, the apparel being in an exposed configuration.
Figure 16A is a first perspective view of apparel, particularly a shirt bearing tracking marks, according to yet another embodiment of the invention, the apparel being in a concealed configuration.
Figure 16B is a second perspective view of the apparel depicted in Figure 16A.
Figure 16C is a third perspective view of the apparel depicted in Figure 16A, the apparel being in an exposed configuration.
Figure 17A is a perspective view of apparel, particularly a shoe bearing tracking marks, according to yet another embodiment of the invention, the apparel being in a concealed configuration.
Figure 17B is a side elevational view of the apparel depicted in Figure 17A, the apparel being in an exposed configuration.
Figure 18A is a first perspective view of apparel, particularly a shoe bearing tracking marks, according to another embodiment of the invention, the apparel being in a concealed configuration.
Figure 18B is a second perspective view of the apparel depicted in Figure 18A, the apparel being in an exposed configuration.
Figure 19A is a first perspective view of apparel, particularly a shoe bearing tracking marks, according to yet another embodiment of the invention, the apparel being in a concealed configuration.
Figure 19B is a second perspective view of the apparel depicted in Figure 19A.
Figure 19C is a third perspective view of the apparel depicted in Figure 19A, the apparel being in an exposed configuration.
Figure 20A is a first side elevational view of apparel, particularly a shoe bearing tracking marks, according to another embodiment of the invention, the apparel being in a concealed configuration.
Figure 20B is a second side elevational view of the apparel depicted in Figure 20A, the apparel being in an exposed configuration.
Figure 21A is a first side elevational view of apparel, particularly a sock bearing tracking marks, according to another embodiment of the invention, the apparel being in a concealed configuration.
Figure 21B is a second side elevational view of the apparel depicted in Figure 21A, the apparel being in an exposed configuration.
Figure 22A is a first perspective view of apparel, particularly a sock bearing tracking marks, according to yet another embodiment of the invention, the apparel being in a concealed configuration.
Figure 22B is a second perspective view of the apparel depicted in Figure 22A, the apparel being in an exposed configuration.
Figure 23A is a first side elevational view of apparel, particularly a hat bearing tracking marks, according to yet another embodiment of the invention, the apparel being in a concealed configuration.
Figure 23B is a perspective view of the apparel depicted in Figure 23A, the apparel being in the concealed configuration.
Figure 23C is a second side elevational view of the apparel depicted in Figure 23A, the apparel being in an exposed configuration.
Figure 24A is a first side elevational view of apparel, particularly a hat bearing tracking marks, according to yet another embodiment of the invention, the apparel being in a concealed configuration.
Figure 24B is a perspective view of the apparel depicted in Figure 24A, the apparel being in the concealed configuration.
Figure 24C is a second side elevational view of the apparel depicted in Figure 24A, the apparel being in an exposed configuration.
Figure 25A is a front elevational view of apparel, particularly a pair of pants bearing tracking marks, according to yet another embodiment of the invention, the apparel being in a concealed configuration.
Figure 25B is a first perspective view of the apparel depicted in Figure 25A, the apparel being in the concealed configuration.
Figure 25C is a second perspective view of the apparel depicted in Figure 25A.
Figure 25D is a third perspective view of the apparel depicted in Figure 25A, the apparel being in an exposed configuration.
Figure 25E is a front elevational view of apparel, particularly a shirt bearing tracking marks, according to yet another embodiment of the invention, the apparel being in a concealed configuration.
Figure 25F is a back elevational view of apparel depicted in Figure 25E, the apparel being in the concealed configuration.
Figure 25G is a perspective view of a sleeve of the apparel depicted in Figure 25E, the apparel being in an exposed configuration.
Figure 26A is a perspective view of two types of apparel, particularly a shirt bearing tracking marks and a pair of pants bearing tracking marks, according to yet another embodiment of the invention, the apparel being in a concealed configuration.
Figure 26B is a first partial perspective view of a sleeve of the apparel depicted in Figure 26A, the apparel being in the concealed configuration.
Figure 26C is a second partial perspective view of the sleeve of the apparel depicted in Figure 26A, the apparel being in an exposed configuration.
Figure 27A is a first perspective view of apparel, particularly a band bearing tracking marks, according to yet another embodiment of the invention, the apparel being in a concealed configuration.
Figure 27B is a second perspective view of the apparel depicted in Figure 27A.
Figure 27C is a third perspective view of the apparel depicted in Figure 27A, the apparel being in an exposed configuration.
Figure 28A is a first perspective view of apparel, particularly a band bearing tracking marks, according to yet another embodiment of the invention, the apparel being in a concealed configuration.
Figure 28B is a side elevational view of the apparel depicted in Figure 28A.
Figure 28C is a second perspective view of the apparel depicted in Figure 28A, the apparel being in an exposed configuration.
Figure 29A is a perspective view of apparel, particularly a band bearing tracking marks, according to another embodiment of the invention, the apparel being in a concealed configuration.
Figure 29B is a top plan view of the apparel depicted in Figure 29A, the apparel being in an exposed configuration.
Figure 30A is a perspective view of apparel, particularly a band bearing tracking marks, according to another embodiment of the invention, the apparel being in a concealed configuration.
Figure 30B is a side elevational view of the apparel depicted in Figure 30A, the apparel being in an exposed configuration.
Figure 31A is a first perspective view of apparel, particularly a band bearing tracking marks, according to yet another embodiment of the invention, the apparel being in a concealed configuration.
Figure 31B is a second perspective view of the apparel depicted in Figure 31A.
Figure 31C is a third perspective view of the apparel depicted in Figure 31A, the apparel being in an exposed configuration.
Figure 32A is a first perspective view of apparel, particularly a band bearing tracking marks, according to yet another embodiment of the invention, the apparel being in a concealed configuration.
Figure 32B is a second perspective view of the apparel depicted in Figure 32A.
Figure 32C is a third perspective view of the apparel depicted in Figure 32A, the apparel being in an exposed configuration.
Figure 33A is a first perspective view of apparel, particularly a band bearing tracking marks, according to yet another embodiment of the invention, the apparel being in a concealed configuration.
Figure 33B is a second perspective view that depicts an additional band of the apparel depicted in Figure 33A.
Figure 33C is a third perspective view of the apparel depicted in Figure 33A.
Figure 33D is a fourth perspective view of apparel depicted in Figure 33A that shows the additional band in an exposed configuration.
Figure 34A is a front elevational view of apparel, particularly a pair of pants bearing tracking marks and a band bearing tracking marks, according to yet another embodiment of the invention, one leg portion of the pants being in a concealed configuration.
Figure 34B is a first perspective view of the band depicted in Figure 34A.
Figure 34C is a second perspective view of the band depicted in Figure 34A.

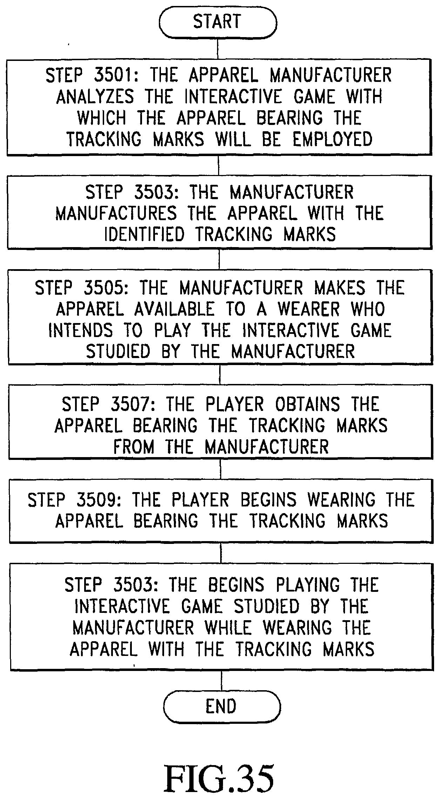

Figure 35 illustrates a flowchart describing a method of manufacturing a piece of apparel with a tracking mark according to various embodiments of the invention.
Figure 36 illustrates the use of a camera with an interactive device according to various embodiments of the invention.
Figure 37 illustrates a graphic representation of the operation of retroreflectivity.
Figure 38 illustrates a camera for use with the invention according to still other embodiments of the invention.

### DETAILED DESCRIPTION OF THE INVENTION

### Overview

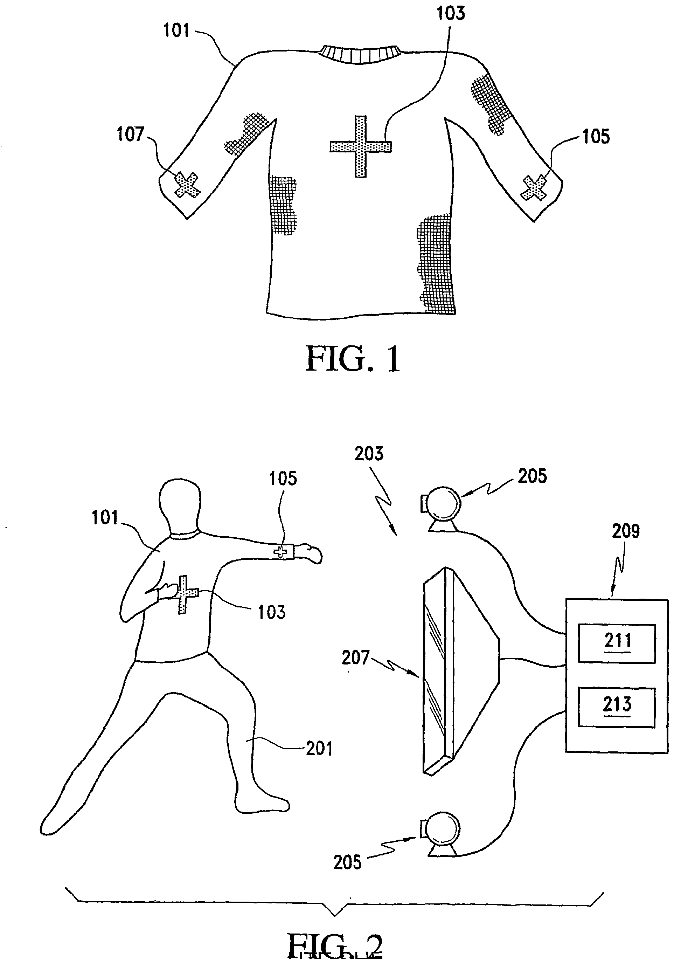

Figure 1 illustrates one example of a piece of apparel employing a plurality of tracking targets in the form of tracking marks that may employed according to various embodiments of the invention. As seen in this figure, a shirt 101 includes a chest tracking mark 103, a left cuff tracking mark 105, and a right cuff tracking mark 107. Each of these tracking marks 103-107 may have a distinctive appearance, such as the appearance of a cross shape as shown in Figure 1. Moreover, each tracking mark 103-107 faces toward the front of the shirt 101 (that is, toward the front of a user wearing the shirt 101), so that the tracking marks 103-107 will appear in images taken by one more cameras of an interactive activity device used by the wearer.

In the illustrated embodiment, the remainder of the shirt 101 other than the tracking marks 103-107 may be a different color from the tracking marks 103-107, to provide good contrast between the tracking marks 103-107 and the remainder of the shirt 101. For example, the tracking marks 103-107 may be bright white, while the remainder of the shirt 101 may be a dark blue, brown, or black. This high contrast between the tracking marks 103-107 and the background of the shirt 101 will assist an interactive activity device employing a camera to distinguish the tracking marks 103-107 from the background provided by the shirt 101. Moreover, the distinctive cross shape of the tracking marks 103-107 may assist a suitably-programmed interactive activity device to identify and distinguish these marks 103-107 from the background provided by the shirt 101. For example, the cross-shaped tracking marks 103-107 be useful when the interactive activity device is programmed to distinguish a cross shape from other shapes imaged by a camera or cameras.

As will be appreciated by those of ordinary skill in the art, the tracking marks 103-107 can be applied to the shirt 101 using a variety of techniques. For example, the tracking marks 103-107 may be stitched to the shirt 101, adhered to the shirt 101 using any suitable adhesive, or woven or knitted into the material of the shirt 101. Further, the tracking marks 103-107 can be printed onto the shirt 101 using a pad printing technique. The tracking marks 103-107 also can be heat transferred onto the shirt 101, die sublimated onto the shirt 101, or simply died into the material of the shirt 101. In addition, the tracking marks 103-107 can be glued onto the shirt 101, impregnated into the shirt 101 using, for example, thermoforming, or etched into the material of the shirt 101. Still further, the tracking marks 103-107 can be permanently mechanically attached to the shirt 10 1 using any suitable fastening mechanism, such as pins or staples. It should also be appreciated that, where desired, each tracking mark 103-107 can be applied to the shirt 101 using a different technique. For example, the chest tracking mark 103 may be stitched to the shirt 101, while the left cuff and right cuff tracking marks 105 and 107 may be silk screened onto the sleeves of the shirt 101.

### Use Of Tracking Marks With An Interactive Activity Device

The use of the shirt 101 according to one embodiments of the invention is shown in Figure 2. As seen in this figure, a user 201 dons the shirt 101, and stands before an interactive activity device 203 which, in the illustrated embodiment, may be an interactive game. More particularly, the user 201 stands within the playing area defined for the interactive computer game 203. The interactive computer game 203 includes a pair of video cameras 205 and a display monitor 207. The interactive computer game 203 also includes a processing unit 209. The processing unit 209 has a tracking mark recognition module 211, and a response module 213. The tracking mark recognition module 211 receives images from the cameras 205. From these images, the tracking mark recognition module 211 recognizes one or more tracking marks in the visual fields of the cameras 205, and determines the movement, if any, of the recognized tracking marks.

For example, the tracking mark recognition module 211 may employ an algorithm to recognize a tracking mark by distinguishing pixels having a particular color in an image obtained by a camera 205 from pixels in that image of other colors. Alternately, the tracking mark recognition module 211 may recognize a tracking mark by distinguishing the brightness of pixels corresponding to the tracking mark from the other pixels in an image obtained by the camera 205. Still further, the recognition module 211 may recognize a tracking mark by distinguishing pixels of a relatively uniform brightness, shade, or color that are arranged in a particular shape. Thus, an interactive activity device may distinguish pixels corresponding to a tracking mark arranged in a cross shape from pixels having a similar color, shade or brightness arranged in another shape.

Once the tracking mark recognition module 211 recognizes one or more tracking marks, it then determines the movement of the recognized tracking marks. Algorithms for determining the movement of recognized images are well known in the art, and thus will not be discussed here in further detail. For example, the tracking mark recognition module 211 may use the "city block" method of determining the three-dimensional position of an imaged tracking mark by comparing the position of a specific location on the mark in the image from one camera 205 with the position of the same location on the tracking mark in a simultaneous image from another camera 205, for the entire area of the tracking mark.

With some embodiments of the invention, the tracking mark recognition module 211 may additionally determine movement of the user's extremities from the detected movement of the tracking marks. For example, using inverse kinematics, the tracking mark recognition module 211 may determine that a user has moved his or her right forearm based upon the detected rotation of one tracking mark (located at the user's wrist) about another stationary tracking mark (located at the user's elbow). The use of reverse kinematics is also well known in the art, and thus will not be described here in detail.

Based upon the detected movement of the tracking marks, the response module 213 then provides a corresponding response on the monitor 207. For example, the interactive activity device may be an interactive game. If the objective of the game is for the player to position himself or herself so as to block a virtual soccer ball from entering a virtual goal, then the response module 213 will determine if the movement of any of the tracking marks 103-107 will place that tracking mark between the virtual soccer ball and the virtual goal. If the response module 213 determines that one of the tracking marks 103-107 has moved to a virtual location between the virtual soccer ball and the virtual goal, then the response module 213 may display a soccer ball moving away from the player 201, indicating that the player has successfully blocked the ball. On the other hand, if the response module 213 determines that the movement of the tracking marks 103-107 does not place a tracking mark between the virtual soccer ball and the virtual goal, then the response module 213 may display a scoring indicator indicating that the player 201 has given up a point in a virtual soccer game.

It should be noted that, with various embodiments of the invention, the tracking mark recognition module 211 may recognize qualitative information from one or more of the tracking marks. Thus, a user may wear apparel that displays a special tracking mark, such as a specific number or pattern. Upon recognizing this number of pattern, the tracking mark recognition module 211 may then provide the operation of the interactive activity device with one or more special features of functions.

For example, if the interactive activity device 203 is a virtual soccer goal-blocking game, the user may wear a shirt bearing the number of a soccer player that is particularly good at blocking high shots on the goal. When the tracking mark recognition module 211 recognizes the number, the game 203 may then relax the user's requirements for successfully blocking a "high" virtual shot on the virtual goal. Alternately, if the interactive activity device 203 provides a training program to assist a user in exercising with handheld or strapped-on weight, the tracking mark recognition module 211 may recognize the mass of the weight from its color, and the game 203 will then adjust the training program accordingly.

Still further, the interactive activity device 203 may use the qualitative information to allow the wearer's access (or, alternately, block the wearer's access to) various features of the interactive activity device 203. For example, if the interactive activity device 203 is a game, then the device 203 may provide the wearer of a specific tracking mark with access to a particular game environment (which may include a particular game "level"). Further, the device 203 may provide a wearer with access to statistics associated with the wearer's mark. Accordingly, if the game is, e.g., a basketball simulation game, wearing a tracking mark corresponding to the uniform number of a particular professional basketball may provide the wearer with access to the wearer's own game statistics and/or the real playing statistics for that professional basketball player.

Moreover, the qualitative information from a tracking mark may be used to open a game within the game that the wearer is playing. Thus, a game player wearing a particular tracking mark may be able to employ the mark to open another type of electronic game embedded within the game that the wearer is already playing. Thus, a wearer of a particular tracking mark may be able to, for example, preview a new game that is embedded within the game that the wearer is already playing. Further, the tracking mark can be used to access game play with a particular player over a network, or to invoke game preferences or other previously-saved information associated with the wearer's tracking mark.

Moreover, the interactive activity device 203 may allow a person wearing a particular tracking mark to, for example, access a specific network site (such as an Internet page) based upon qualitative information represented by a tracking mark. Again, if the interactive activity device 203 is a game, then the wearer of a particular tracking mark may be able to use the qualitative information represented by that mark to access a network site corresponding to a specific gaming group or to another game player.

With some of these embodiments, the interactive activity device 203 may use the tracking marks only to obtain such qualitative information. The game 203 may then determine the user's position or movements using techniques other than with the tracking marks, such as by conventional infrared, visible light or sonic positioning and motion detection techniques.

In addition to passively providing qualitative information, the tracking marks may also provide qualitative information when moved. For example, the tracking mark recognition module 211 may recognize particular movements or motions of one or more tracking marks as character information or instructional information. Thus, with some embodiments of the invention, a user may make a particular motion with one or more tracking marks, and the tracking mark recognition module will recognize these motions to be an instruction to, e.g., turn off the game, change the type or characteristics of the game, input alphanumeric information, or provide other qualitative information.

### Apparel Bearing Tracking Marks

The various tracking marks 103-107 on shirt 101 are positioned externally and are generally exposed when player 201 is wearing shirt 101. As discussed above, tracking marks 103-107 may be formed to have relatively high contrast with respect to other portions of shirt 101, or tracking marks 103-107 may be formed to have a particular shape, color, or reflectivity, for example. Tracking marks 103-107 may, therefore, be a prominent feature of shirt 101. Accordingly, player 201 may prefer that tracking marks 103-107 be concealed in order to provide shirt 101 with a relatively conventional appearance when player 201 is not engaged in playing interactive computer game 203 or when player 201 is in a public area, for example.

Additionally, when player 201 is within a playing area of interactive computer game 203, the positions of tracking marks 103-107 are detected and tracked by interactive computer game 203. Under some circumstances, other individuals that are wearing apparel bearing tracking marks may also be within the playing area. The other individuals, however, may wish to remain undetected by interactive computer game 203. For example, the other individuals may be preparing to take part in interactive computer game 203, or the other individuals may be attempting to view display monitor 207 in order to evaluate the ability of player 201 to progress through the various challenges posed by interactive computer game 203. When the other individuals are within the playing area, the tracking marks on the apparel of the other individuals may be inadvertently detected by interactive computer game 203, thereby affecting the game play of player 201. Accordingly, the other individuals may wish to conceal the various tracking marks to limit inadvertent detection by interactive computer game 203.

The following material discloses various types of apparel that each includes an article of wear and at least one tracking target in the form of a tracking mark. The articles of wear may vary significantly within the scope of various embodiments of the present invention to include shirts, pants, socks, shoes, hats, and wristbands, for example, and the articles of wear may be configured to selectively conceal the tracking marks from view or to selectively expose the tracking marks. Accordingly, the player 201 or the other individuals may conceal the tracking marks in public areas or conceal the tracking marks to prevent detection by interactive computer game 203. Similarly, the player 201 or the other individuals may expose the tracking marks when detection by interactive computer game 203 is desired.

Some applications for interactive computer game 203 may require that the position of the hands be detected. For example, an application that simulates the game of volleyball may include game play that involves setting or otherwise hitting a volleyball. Accordingly, apparel in the form of a shirt may be utilized in conjunction with tracking marks positioned on the sleeves to provide interactive computer game 203 with accurate data concerning the position of the arms or hands. A shirt may also include one or more tracking marks positioned on the torso area to provide interactive computer game 203 with data concerning the position of the body.

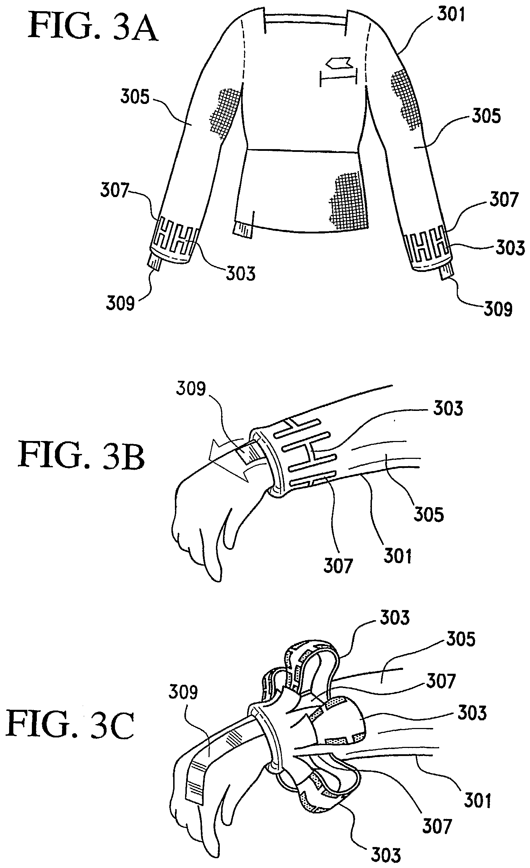

Apparel having a long-sleeved shirt 301 and a pair of tracking marks 303 is depicted in Figures 3A-3C. In contrast with shirt 101, wherein tracking marks 103-107 are positioned externally and are generally exposed when player 201 is wearing shirt 101, an individual may selectively conceal or expose tracking marks 303. With reference to Figures 3A and 3B, tracking marks 303 are depicted as being positioned within sleeves 305 of shirt 301, thereby placing shirt 301 in a concealed configuration wherein tracking marks 303 are generally not visible and not detectable by interactive computer game 203. With reference to Figure 3C, however, one of tracking marks 303 is depicted as protruding through a plurality of apertures 307 defined in one of sleeves 305. Accordingly, Figure 3C depicts shirt 301 as being in an exposed configuration, wherein tracking marks 305 are exposed and generally detectable by interactive computer game 203.

Each of sleeves 305 are formed from two concentric layers of material, and tracking marks 303 are positioned between the layers when shirt 301 is in the concealed configuration. A pair of tabs 309 are secured to tracking marks 303 and are utilized to convert shirt 301 from the concealed configuration to the exposed configuration. An end portion of each tab 309 extends from a wrist opening in each of sleeves 305. In order to convert shirt 301 from the concealed configuration to the exposed configuration, the individual grasps tabs 309 and pulls tabs 309 outward, thereby drawing tracking marks 303 toward the wrist openings and causing tracking marks 303 to flex outward and protrude through apertures 307.

Tracking marks 303 have the structure of a plurality of elongate strips that are arranged in a generally circular or cylindrical manner within sleeves 305. In addition, tracking marks 303 are formed from a material that flexes outward when shirt 301 is in the exposed configuration and returns to a substantially planar configuration when shirt 301 is in the concealed configuration. Accordingly, a variety of flexible materials, such as textiles, rubber, or various polymer materials, may be utilized to form tracking marks 303. In order to ensure that tracking marks 303 are detectable by interactive computer game 203, each tracking mark 303 may have a relatively high contrast with respect to other portions of shirt 301, or each tracking mark 303 may have a particular color, pattern, shape, or reflectivity.

Tabs 309 may also form a detectable portion of tracking marks 303 when shirt 301 is in the exposed configuration, thereby increasing the total detectable area of tracking marks 303. In the concealed configuration, relatively small portions of tabs 309 extend outward from the wrist openings, as depicted in Figures 3A and 3B. In the exposed configuration, however, significantly larger portions of tabs 309 extend outward from the wrist openings and cover a portion of the hand, as depicted in Figure 3C. Openings formed in the ends of tabs 309 may be placed around fingers to retain shirt 301 in the exposed configuration. When the individual intends to convert shirt 301 from the exposed configuration to the concealed configuration, the openings may be removed from the fingers and tracking marks 303 will retreat into apertures 307 and become substantially concealed.

Tracking marks 303, as depicted in Figures 3A-3C and discussed above, are positioned adjacent the wrist openings of shirt 301. The general concept of utilizing a tab to selectively conceal or expose tracking marks embedded within apparel may be applied to other areas of a shirt, such as the elbow area, shoulder area, or torso area, for example. Accordingly, the general structure of tracking marks 303 may be applied to other areas of a shirt to provide interactive computer game 203 with data concerning the positions of the other areas. Furthermore, this general structure could be applied to other types of apparel, such as a pair of pants. For example, the general structure of tracking marks 303 could be applied to an area adjacent ankle openings of the pants to provide interactive computer game 203 with data concerning the positions of the feet or ankles. One skilled in the relevant art will recognize, therefore, that the general structure disclosed with respect to shirt 303 may be applied to a variety of locations on the body and a variety apparel types.

Based upon the above discussion, shirt 301 and tracking marks 303 provide apparel for interactive gaming that is convertible from a concealed configuration to an exposed configuration. In the concealed configuration, tracking marks 303 are substantially concealed from view and are not detectable by interactive computer game 203. In the exposed configuration, however, tracking marks 303 are exposed and trackable by interactive computer game 203. Additional articles of apparel that are convertible from a concealed configuration to an exposed configuration will be discussed in the following material.

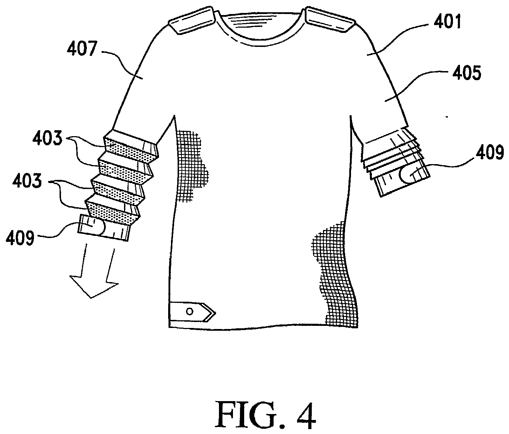

Another type of apparel in accordance with the present invention, which includes a shirt 401 and tracking marks 403, is depicted in Figure 4. Tracking marks 403 are located on a right sleeve 405 and a left sleeve 407 of shirt 401. As represented in Figure 4, right sleeve 405 is in a concealed configuration that substantially conceals one of tracking marks 403. Left sleeve 407, however, is in an exposed configuration, wherein one of tracking marks 403 is visible and trackable by interactive computer game 203.

Sleeves 405 and 407 have a corrugated structure that compresses and expands in the manner of an accordion. The corrugated structure has surfaces that alternately face toward a shoulder area of shirt 401 and face toward a wrist opening of shirt 401. The various surfaces that face the shoulder area are formed to have properties, such as color, texture, and reflectivity, which are substantially similar to a remainder of shirt 401. The various surfaces that face the wrist opening, however, include the tracking marks 403, which have a contrast, color, shape, or reflectivity, for example, which is detectable and trackable by interactive computer game 203.

Right sleeve 405 is depicted in Figure 4 as being in the concealed configuration. Accordingly, the corrugated structure of right sleeve 405 is compressed such that the surfaces having tracking marks are hidden from view, and the other surfaces are visible. A strap 409 that encircles the wrist opening of right sleeve 405 may be utilized by the individual to secure right sleeve 405 in the concealed configuration. In contrast with right sleeve 405, left sleeve 407 is depicted in Figure 4 as being in the exposed configuration. Accordingly, the corrugated structure of left sleeve 407 is expanded such that the surfaces having tracking marks are exposed and trackable by interactive computer game 203. A strap 409 that encircles the wrist opening of left sleeve 407 may be utilized by the individual to secure left sleeve 407 in the exposed configuration.

Shirt 401 is structured such that the tracking mark 403 positioned on the right sleeve 407 may be concealed or exposed independently of the tracking mark 403 that is positioned on the left sleeve 407. One skilled in the relevant art will recognize that the ability to independently conceal and expose tracking marks 403 may have benefits in specific applications for interactive computer game 203. For example, an application that simulates the game of bowling may be most effective if only one tracking mark 403 is detectable, thereby providing interactive computer game 203 with data concerning only the hand that grasps and releases the bowling ball.

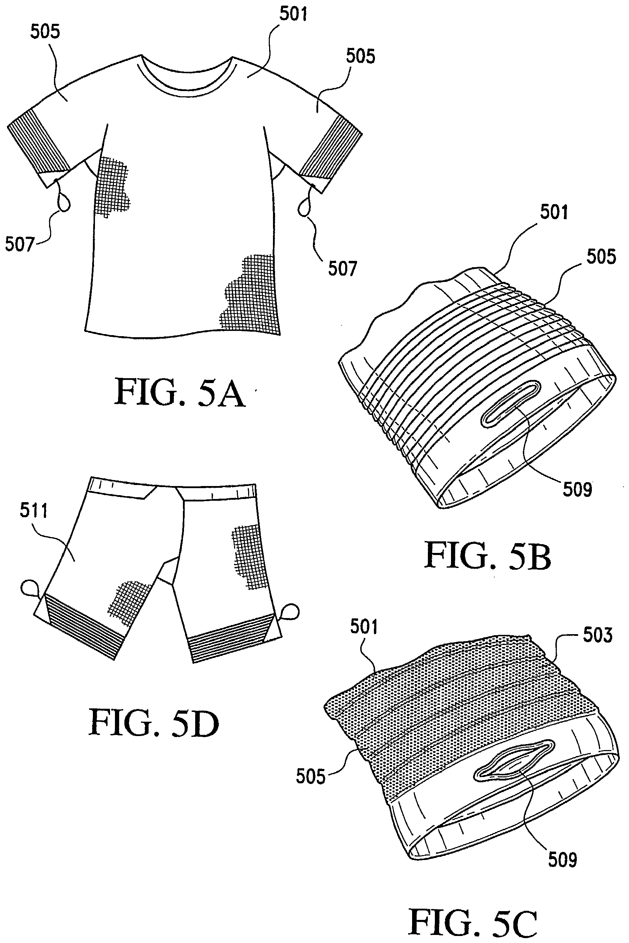

When converting shirt 401 from the concealed configuration to the exposed configuration, sleeves 405 and 407 are effectively converted from a short-sleeve configuration to a long-sleeve configuration. In other words, the length of sleeves 405 and 407 increase in the process of converting shirt 401 from the concealed configuration to the exposed configuration. Figures 5A to 5C disclose similar apparel, particularly a shirt 501 having tracking marks 503, wherein a pair of sleeves 505 also increase in length during the conversion from the concealed configuration to the exposed configuration. Sleeves 505 each have a corrugated structure that compresses and expands in the manner of an accordion. When sleeves 505 are compressed, as depicted in Figures 5A and 5B, tracking marks 503 are concealed. When sleeves 505 are expanded, as depicted in Figure 5C, tracking marks 503 are exposed and may be tracked by interactive computer game 203.

A pair of drawstrings 507 and thumb apertures 509 are utilized to retain shirt 501 in the concealed configuration and the exposed configuration, respectively. Drawstrings 507 extend around sleeves 505 and may be tightened or loosened in a conventional manner. When tightened, drawstrings will effectively prevent sleeves 505 from expanding and inadvertently placing shirt 501 in the exposed configuration. Alternately, elastic elements within sleeves 505 or straps may be present to retain shirt 501 in the concealed configuration. When sleeves 505 are expanded and tracking elements 503 are exposed, a thumbs or other finger is placed within each thumb aperture 509 to prevent sleeves 505 from contracting. Accordingly, thumb apertures 509 may be utilized to retain shirt 501 in the exposed configuration.

Apparel having a similar structure is depicted in Figure 5D as a pair of pants 511 that have tracking marks (not shown). Leg portions of pants 511 operate in a manner that is similar to sleeves 505 of shirt 501, thereby expanding to expose the tracking marks and contracting to conceal the tracking marks. Whereas shirt 501 includes thumb apertures 509 to retain shirt 501 in the exposed configuration, a pair of straps that extend under the feet may be utilized in pants 511 to retain the leg portions in the exposed configuration.

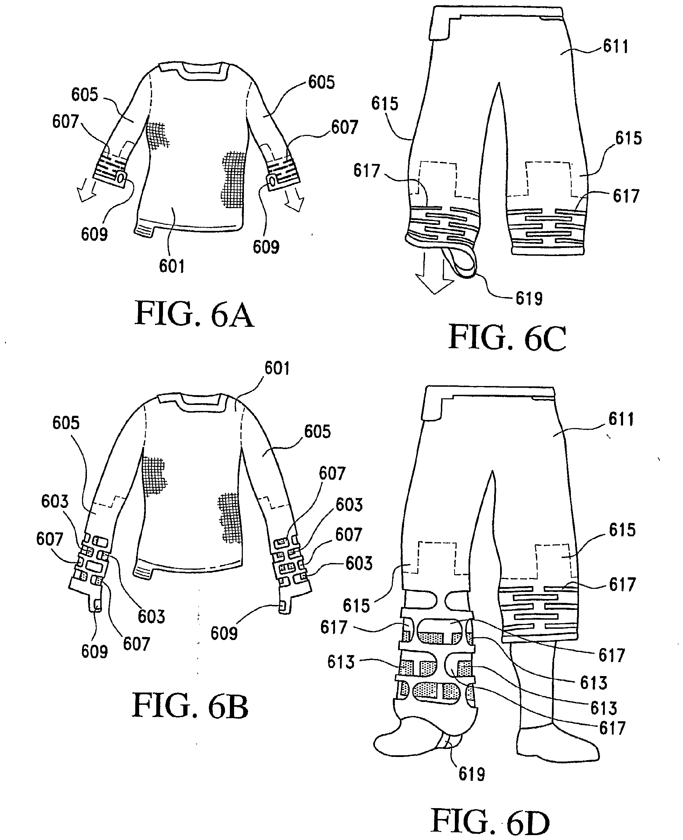

Apparel having a shirt 601 and tracking marks 603 is depicted in Figures 6A and 6B. Shirt 601 includes sleeves 605 formed of a resilient, elastic material that defines a plurality of apertures 607. Tracking marks 603 are positioned behind apertures 607. As illustrated in Figure 6A, shirt 601 is in the concealed configuration, wherein apertures 607 are substantially closed and tracking marks 603 are not detectable by interactive computer game 203. When sleeves 605 are expanded, as depicted in Figure 6B, the material forming sleeves 605 expands and apertures 607 open, thereby exposing tracking marks 603. Thumb apertures 609 that are formed in each of sleeves 605 may also receive thumbs of the individual to retain sleeves 605 in the expanded and exposed configuration. When the individual desires to modify shirt 601 to the concealed configuration, the thumbs may be removed from thumb apertures 609 and the elasticity of sleeves 605 will operate to close apertures 607 in the manner depicted in Figure 6A.

Another type of apparel having the general structure of shirt 601 is depicted in Figures 6C and 6D as a pair of pants 611 that includes tracking marks 613. In the concealed configuration, which is depicted in Figure 6C, two leg portions 615 are compressed and a plurality of apertures 617 defined in leg portions 615 are closed to conceal tracking marks 613. In Figure 61), however, one of leg portions 615 is expanded and placed in the exposed configuration, thereby exposing tracking marks 613. Each leg portion 615 includes a strap 619 that extends under the foot to retain pants 611 in the exposed configuration.

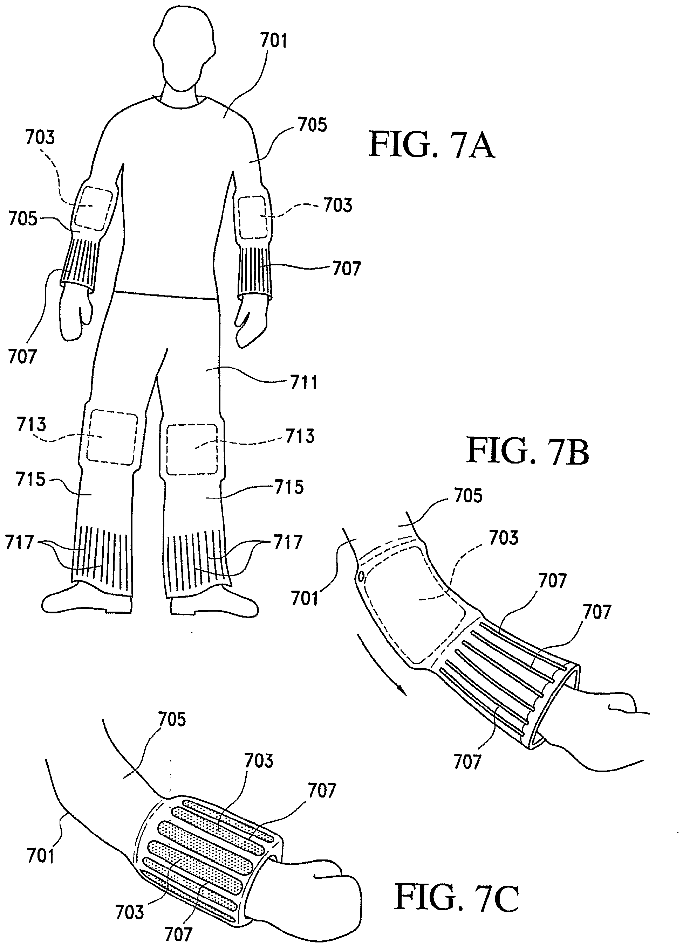

With reference to Figures 7A-7C, apparel that includes a shirt 701 and tracking marks 703 is disclosed. Shirt 701 includes sleeves 705 that are formed of two concentric layers of material. Adjacent the wrist openings of sleeves 705, the outermost layer of material includes a plurality of parallel apertures 707. Tracking marks 703 have a cylindrical structure and are positioned between the layers of material forming sleeves 705. In the concealed configuration, as depicted in Figures 7A and 7B, tracking marks 703 are positioned in an elbow area of sleeves 705 and are not visible through apertures 707. In order to convert shirt 701 from the concealed configuration to the exposed configuration, the individual moves tracking marks 703 toward the wrist openings, thereby exposing tracking marks 703 through apertures 707, as depicted in Figure 7C. Similarly, tracking marks 703 are moved away from apertures 707 to convert shirt 701 from the exposed configuration to the concealed configuration. The material forming shirt 701, and particularly sleeves 705, may be an elastic material that expands to open apertures 707 when tracking marks 703 are positioned adjacent apertures 707.

Apparel that includes pants 711 and tracking marks 713 is also disclosed in Figure 7A. Pants 711 operate in a manner that is similar to shirt 701. Accordingly, tracking marks 713 are positioned between layers of material that form a pair of leg portions 715. In order to place pants 711 in the exposed configuration, tracking marks 713 are shifted downward and positioned behind a plurality of apertures 717 defined in leg portions 715.

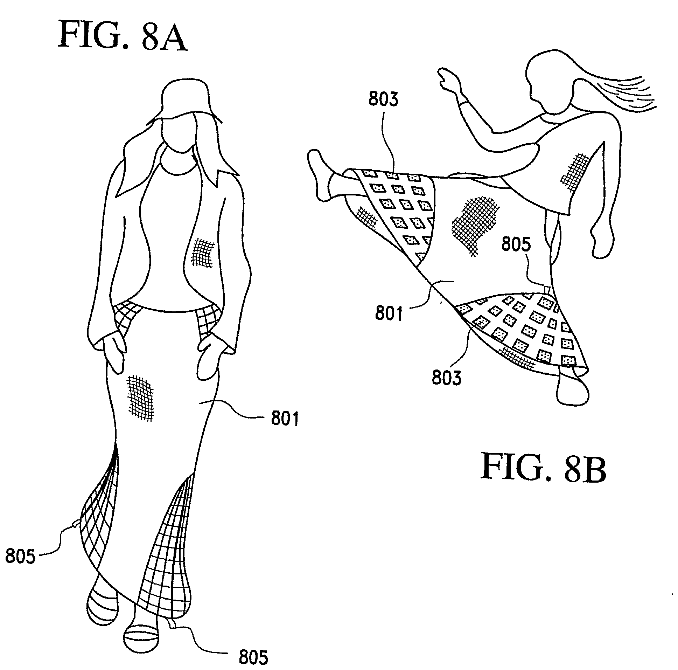

Another type of apparel, particularly a dress 801 having tracking marks 803, is depicted in Figures 8A and 8B. In the concealed configuration, as depicted in Figure 8A, a pair of zippers 805 that are located on opposite sides of dress 801 conceal additional material and tracking marks 803. In order to convert dress 801 from the concealed configuration to the exposed configuration, zippers 805 are opened, thereby exposing the additional material and tracking marks 803.

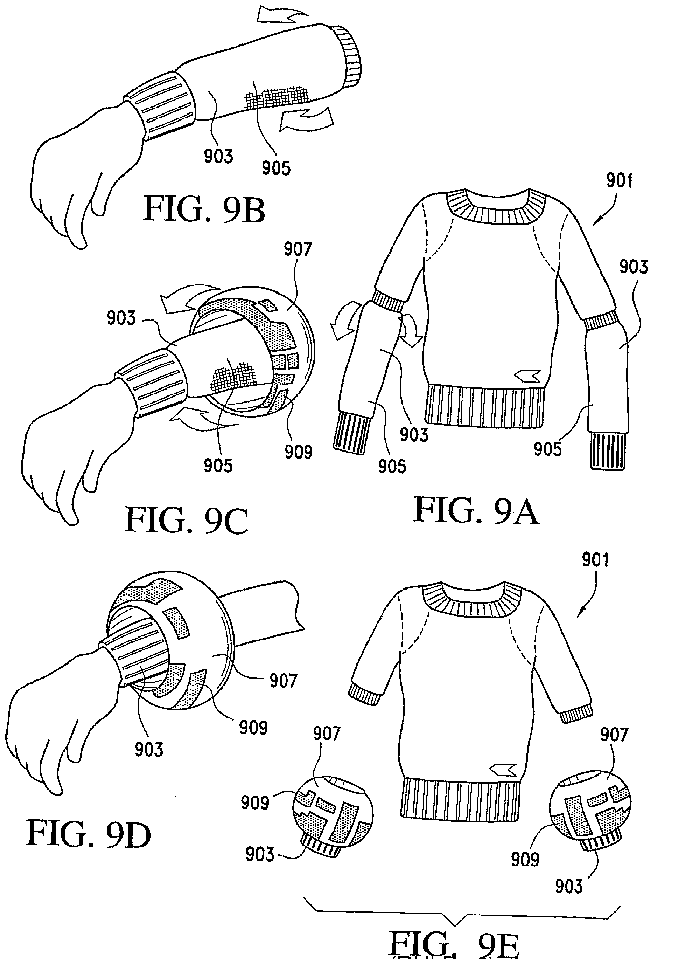

Another shirt 901 is depicted in Figures 9A-9E and includes a pair of detachable sleeves 903. Each of sleeves 903 includes a first surface 905 with properties, such as color, texture, and reflectivity, which are substantially similar to a remainder of shirt 901 and are not generally trackable by interactive computer game 203. Each of sleeves 903 also include an opposite second surface 907 that includes tracking marks 909, which are trackable by interactive computer game 203. In the concealed configuration, which is depicted in Figures 9A and 9B, sleeves 903 form a wrist, forearm, and elbow portions of shirt 901, and first surface 905 faces outward. In order to convert shirt 901 from the concealed configuration to the exposed configuration, sleeves 905 are rolled downward toward the wrist opening, as depicted in Figure 9C and 9D, thereby exposing second surface 907 and tracking marks 909. In the exposed configuration, therefore, each of sleeves 903 are rolled toward the wrist opening such that tracking marks 909 face outward, as depicted in Figure 9E.

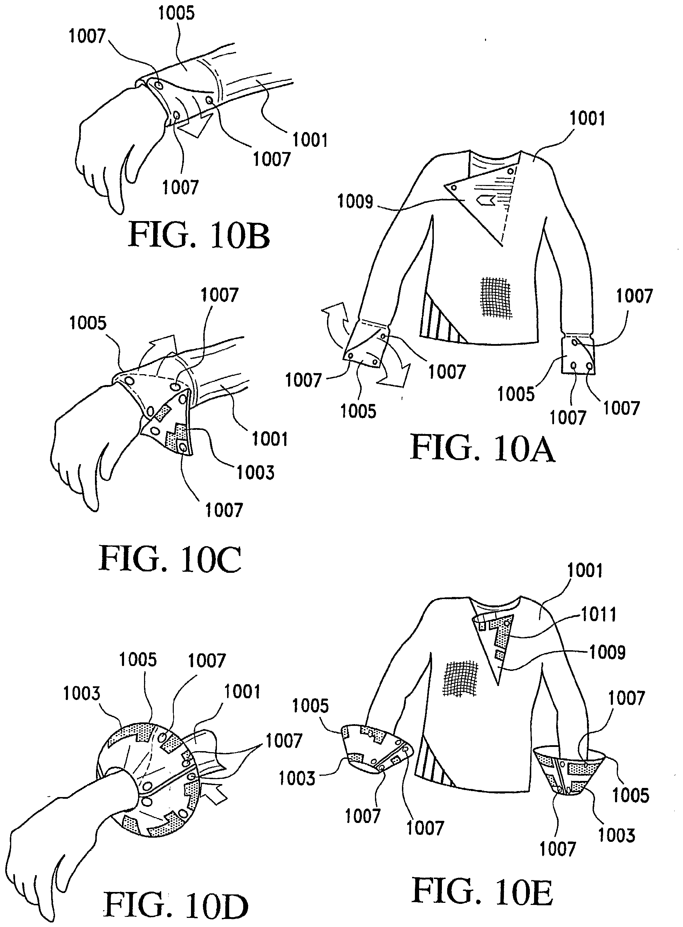

Shirt 901 generally operates to convert from the concealed configuration to the exposed configuration by reversing the surfaces of sleeves 905 that are exposed. Apparel operating in a similar manner is depicted in Figures 10A-10E and includes a shirt 1001 and tracking marks 1003. Shirt 1001 includes a pair of cuff areas 1005 associated with each sleeve. Each cuff area 1005 includes overlapping sections of material and fasteners 1007 that secure the overlapping sections together. Fasteners 1007 may have the configuration of snaps, buttons, a hook and loop fastener, or a magnetic fastening system, for example. Referring to Figure 10A and 1013, shirt 1001 is depicted in the concealed configuration and cuff areas 1005 exhibit a substantially conventional appearance that hides tracking marks 1003. Cuff areas 1005 have a first surface that faces outward when shirt 1001 is in the concealed configuration. In order to convert shirt 1001 from the concealed configuration to the exposed configuration, fasteners 1007 and the overlapping sections of material are separated, as depicted in Figures 10C and 10D. Cuff areas 1005 are then folded backwards to expose tracking marks 1003, which are positioned on a second surface that is opposite the first surface, and fasteners 1007 are resecured to place shirt 1001 in the exposed configuration depicted in Figure 10E The reverse procedure may be employed to convert shirt 1001 from the exposed configuration to the concealed configuration.

Shirt 1001 also includes a flap 1009 positioned in a torso area. A first surface of flap 1009 has properties that are similar to other portions of shirt 1001, but a second surface of flap 1009 includes a tracking mark 1011 that is trackable by interactive computer game 203. In order to convert shirt 1001 from the concealed configuration to the exposed configuration, flap 1009 is folded backward and tracking mark 1011 is exposed. Fasteners that are similar to fasteners 1007 may be utilized to secure the position of flap 1009 in either the concealed configuration or the exposed configuration.

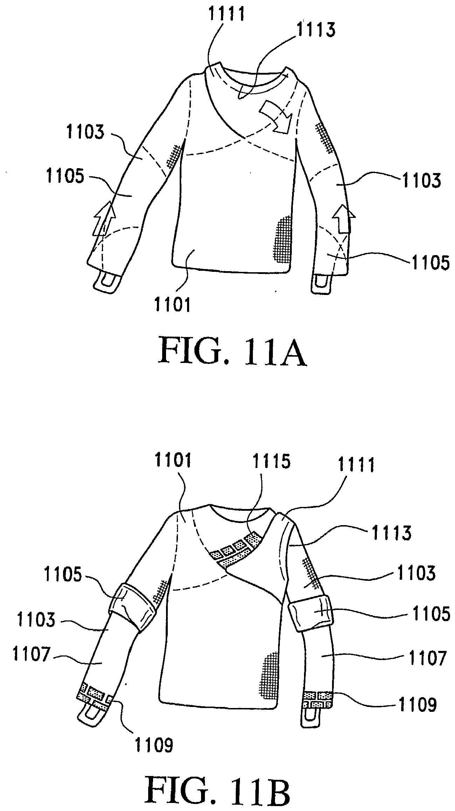

A shirt 1101 is depicted in Figures 11A and 11B and has a pair of sleeves 1103 that are formed of at least two concentric layers of material. Each sleeve 1103 includes,therefore, an outer layer 1105 that extends over an inner layer 1107. In the concealed configuration, which is depicted in Figure 11A, outer layer 1105 covers inner layer 1107 and conceals tracking marks 1109 that are positioned on inner layer 1107. In order to convert shirt 1103 to the exposed configuration, which is depicted in Figure 11B, outer layer 1105 is rolled or folded toward an elbow area of sleeves 1103, thereby exposing inner layer 1107 and tracking marks 1109. Furthermore, each inner layer 1107 may include a thumb aperture that extends over the thumb and secures the position of inner layer 1107 and tracking marks 1109 with respect to the hand.

Shirt 1101 also includes a flap 1111 located in a torso area of shirt 1101 and having an aperture 1113. Flap 1111 covers another tracking mark 1115 that is positioned on the torso area of shirt 1101. In the concealed configuration, flap 1111 covers tracking mark 1115 and the player's head extends through aperture 1113. A magnetic fastener located adjacent aperture 1113 and on a shoulder area of shirt 1101 may be utilized to secure the position of flap 1111 in the concealed configuration. In the exposed configuration, however, flap 1111 is pulled over the head, and the player's right arm is positioned through aperture 1113, thereby exposing tracking mark 1115.

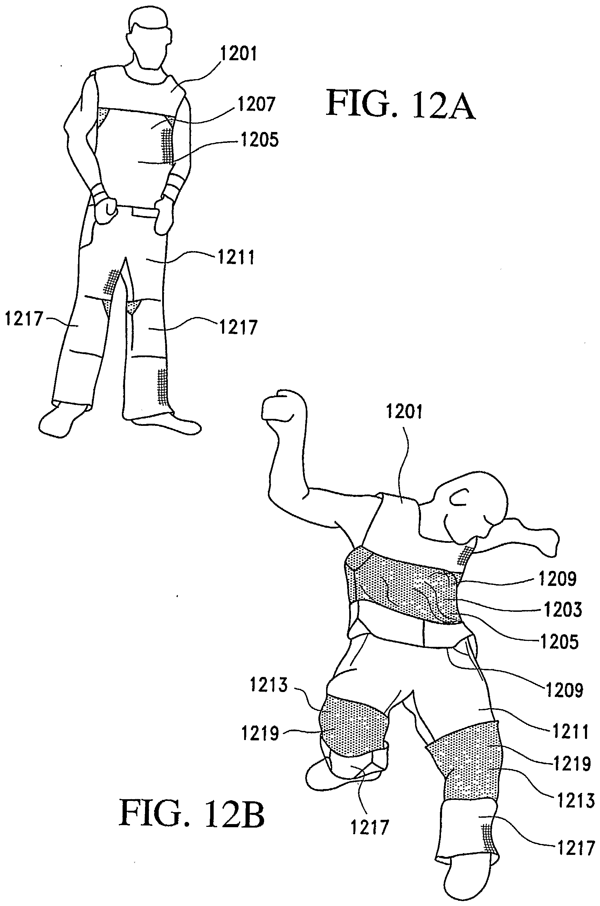

In converting shirt 1101 from the concealed configuration to the exposed configuration the general operation includes rolling or folding material to expose tracking marks 1109. A similar operation may be utilized in other apparel types, including a shirt 1201 and a pair of pants 1211 that are depicted in Figures 12A and 12B. A tracking mark 1203 is positioned on a torso area 1205 of shirt 1201. Torso area 1205 includes an outer layer 1207 and an inner layer 1209 that are concentrically arranged. In the concealed configuration, outer layer 1207 extends over inner layer 1209 and covers tracking mark 1203. Shirt 1201 is converted from the concealed configuration to the exposed configuration by folding outer layer 1207 downward, thereby exposing inner layer 1209 and tracking mark 1203. Pants 1211 operate in a manner that is similar to shirt 120 1. In general, tracking marks 1213, which are located in leg areas of pants 1211, are exposed by folding outer layers 1217 away from inner layers 1219 that each include one of tracking marks 1213.

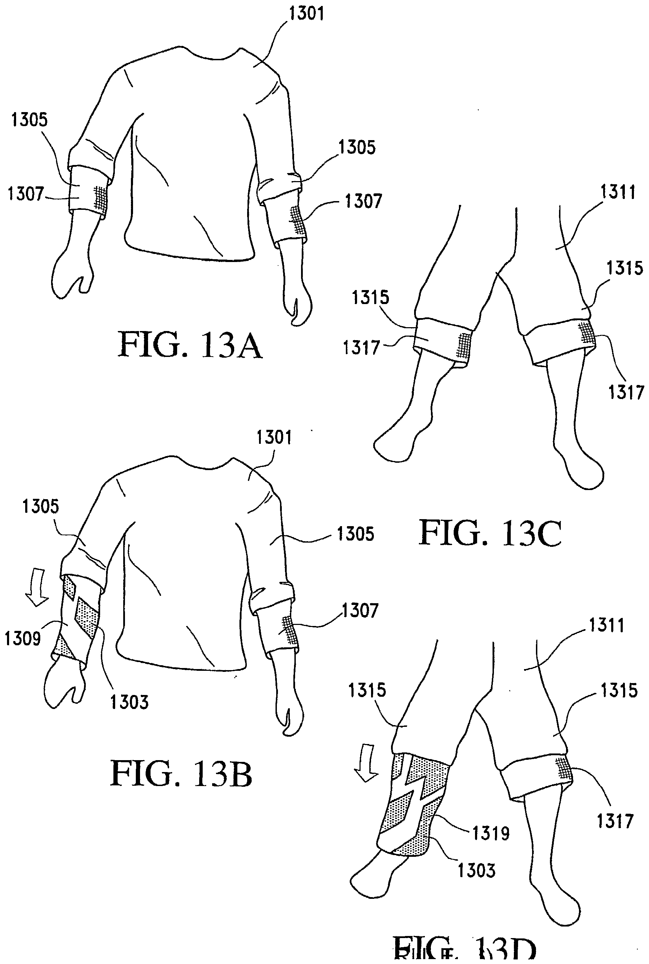

Another apparel structure is depicted in Figures 13A and 13B and includes a shirt 1301 and tracking marks 1303. Shirt 301 includes a pair of sleeves 1305 that each have a first surface 1307 and a second surface 1309. In the concealed configuration, lower sleeves 1305 are folded such that first surface 1307 faces outward and first surface 1307 forms a surface that contacts the arm of the individual. In effect, therefore, each sleeve 1305 is fashioned from a folded element of material that forms two concentric layers, and tracking mark 1303 is located on second surface 1309, which is folded back upon itself in the concealed configuration. In order to convert shirt 1301 from the concealed configuration to the exposed configuration, sleeves 1305 are merely unfolded such that first surfaces 1307 lie adjacent to the arms and second surfaces 1309 face outward, thereby exposing tracking mark 1303.

Apparel having a pair of pants 1311 and tracking marks 1313 is depicted in Figures 13C and 13D. In a manner that is similar to shirt 1301, pants 1311 have leg portions 1315 that each have a first surface 1317 and a second surface 1319. Referring to Figure 13C, which depicts the concealed configuration, leg portions 1315 are folded such that only first surface 1317 is visible. In Figure 13D, however, one of leg portions 1315 is unfolded such that first surface 1317 lies adjacent to the leg and second surface 1319, which includes one of tracking marks 1313, faces outward. Accordingly, pants 1311 may be converted from the concealed configuration to the exposed configuration by merely unfolding leg portions 1313. Similarly, pants 1311 may be converted from the exposed configuration to the concealed configuration by merely refolding leg portions 1313.

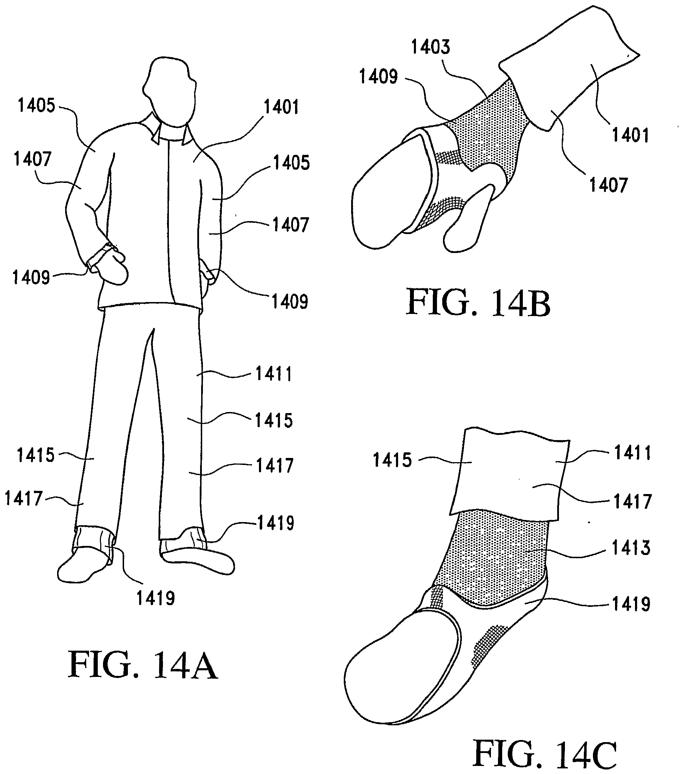

Another general procedure by which apparel may be converted from the concealed configuration to the exposed configuration relates to stretching the apparel in a manner that exposes the tracking marks. For example, apparel having a shirt 1401 and tracking marks 1403 is depicted in Figure 14A and 14B. Shirt 1401 includes two sleeves 1405 that are generally formed of two concentric layers of material, an exterior layer 1407 and an interior layer 1409, Exterior layer 1407 generally extends over interior layer 1409 and is formed of a material that is generally not detectable by interactive computer game 203. A first portion of interior layer 1409 extends out of exterior layer 1407 and forms a cuff of shirt 1401. Tracking marks 1403, however, are positioned on a second portion of interior layer 1409 that is concealed by exterior layer 1407 when shirt 1401 is in the concealed configuration, as depicted in Figure 14A. In order to convert shirt 1401 from the concealed configuration to the exposed configuration, interior layer 1409 is stretched outward, as depicted in Figure 14B, thereby extending the second portion of interior layer 1409 out of exterior layer 1407 and exposing tracking marks 1403. The area of interior layer 1409 that forms the cuff includes an aperture that may be placed around the thumb to prevent interior layer 1409 from contracting and extending back into exterior layer 1407. Accordingly, stretching interior layer 1407 converts shirt 1401 from the concealed configuration to the exposed configuration.

Figure 14A and 14C both depict a pair of pants 1411 and tracking marks 1413 with a similar structure. Pants 1411 have leg portions 1415 that are each formed of an exterior layer 1417 and an interior layer 1419. Tracking marks 1413 are positioned on interior layers 1419. As depicted in Figure 14A, pants 1411 are in a concealed configuration and tracking marks 1413 are not exposed. In order to convert pants 1411 from the concealed configuration to the exposed configuration, interior layers 1419 are stretched outward and tracking marks 1413 are exposed, as depicted in Figure 14C. A portion of interior layer 1419 may be placed around the foot to retain pants 1411 in the exposed configuration.

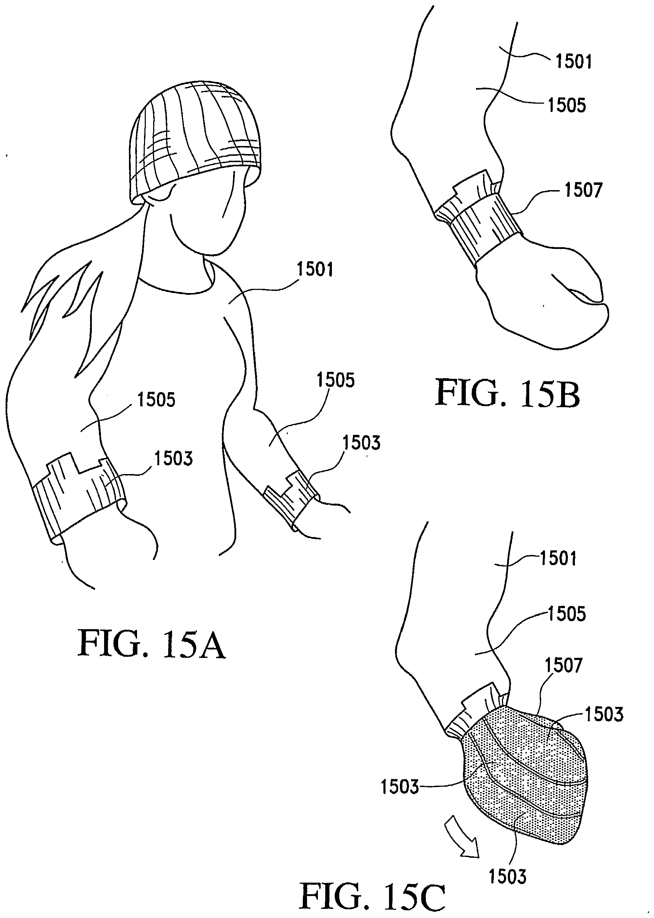

Another embodiment wherein a portion of apparel, which includes a shirt 1501 and tracking marks 1503, is stretched to expose tracking marks 1503 is depicted in Figures 15A-15C. Shirt 1501 includes a pair of sleeves 1505 that have cuffs 1507. Each cuff 1507 is formed of a knitted or elastic material that has a ribbed structure. When cuffs 1507 extend around wrists of the individual, as depicted in Figures 15A and 15B, cuffs 1507 have a substantially conventional appearance and tracking, marks 1503 are concealed. When cuffs 1507 are stretched over the hands, however, the various ribs in cuffs 1507 separate to reveal tracking marks 1503, as depicted in Figure 15C.

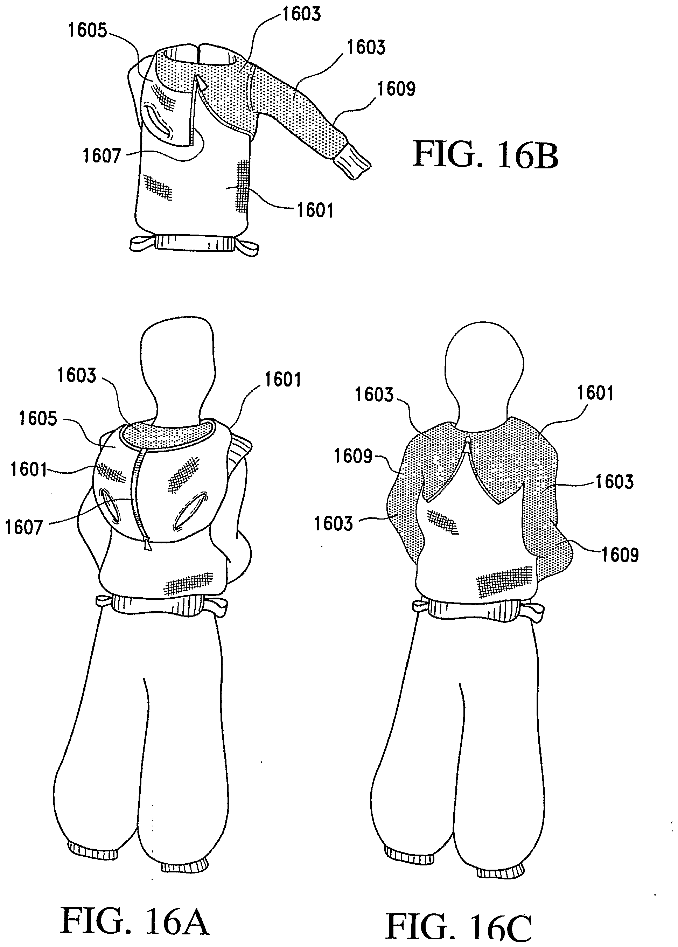

Figures 16A-16C disclose apparel having a shirt 1601 and tracking marks 1603. In the concealed configuration, which is depicted in Figure 16A, shirt 1601 has the general structure of a vest that includes a hood 1605. In order to convert shirt 1601 from the concealed configuration to the exposed configuration, hood 1605 is unzipped along a zipper line 1607 to reveal a pair of sleeves 1609 that include the tracking marks 1603, as depicted in Figure 16B. In addition, tracking marks 1603 are positioned on other interior portions of hood 1605, which extend around the back of the individual when shirt 1601 is in the exposed configuration, as depicted in Figure 16C.

The above descriptions of apparel, which were disclosed with reference to Figures 3A-16C provide various examples of shirts and pants that may be utilized to selectively conceal and expose tracking marks. In some embodiments, a structure for concealing and exposing tracking marks was disclosed with respect to a shirt, for example. One skilled in the relevant art will recognize that a similar structure may also be applied to other types of apparel, such as pants, a coat, shoes, or sock, for example. Accordingly, the various structures for concealing and exposing tracking marks are disclosed with respect to a specific type of apparel to merely provide an example of the manner in which the structures may be incorporated into apparel, and are not intended to limit the invention to any specific type of apparel. Furthermore, the above discussions generally provide instructions regarding the manner in which apparel is converted from the concealed configuration to the exposed configuration. One skilled in the relevant art will recognize that a reverse process may be employed to convert the apparel from the exposed configuration to the concealed configuration.

Some applications for interactive computer game 203 may require that the position of the feet, rather than the position of the ankles or legs, be detected. For example, an application that simulates the game of soccer may include game play that involves kicking a soccerball. Accordingly, apparel in the form of footwear, which includes shoes and socks, may be utilized in conjunction with tracking marks to provide interactive computer game 203 with accurate data concerning the position of the feet.

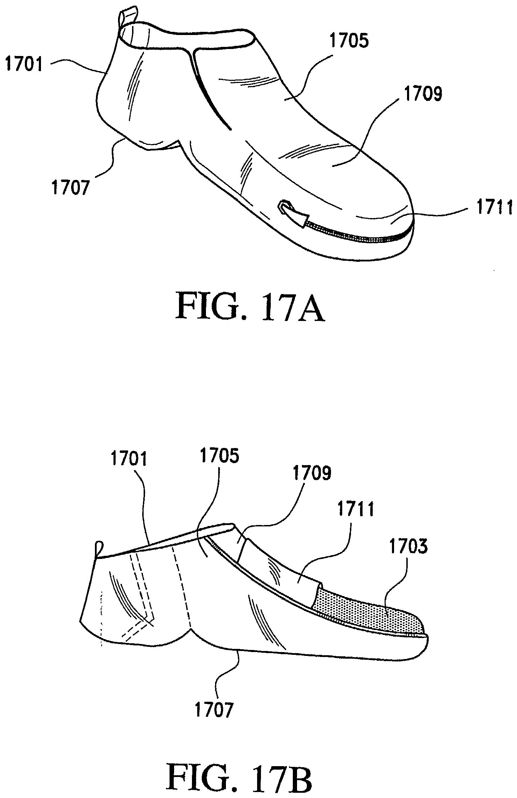

A shoe 1701 having a tracking mark 1703 is depicted in Figures 17A and 17B. Shoe 1701 includes an upper 1705 and a sole 1707. Upper 1705 is configured to comfortably and securely receive a foot, thereby fastening shoe 1701 to the foot. Sole 1707 is attached to a lower portion of upper 1705 and may include two primary elements, a midsole and an outsole. The midsole attenuates ground reaction forces and absorbs energy to cushion the foot and leg from impact with the ground. The outsole is a wear resistant element for engaging the ground and providing traction. In general, therefore, shoe 1701 has the configuration of a conventional shoe, such as a running shoe or cross training shoe that, for example, is utilized for athletic activities.

Upper 1705 includes an instep area 1709 that corresponds with the instep portion of the foot. In other words, instep area 1709 extends along the top surface of upper 1705 from the toe region to the ankle opening. The material forming upper 1705 in instep area 1709 forms a flap 1711 that may be utilized to selectively conceal or expose tracking mark 1703. With reference to Figure 17A, shoe 1701 is depicted in the concealed configuration, wherein flap 1711 extends over tracking mark 1703. When the individual intends to expose tracking mark 1703, however, flap 1711 may be pulled toward the ankle opening and secured in position with a magnetic fastener or a hook and loop fastener, for example. Accordingly, shoe 1701 may be placed in the exposed configuration by removing flap 1711 from the area of tracking mark 1703, as depicted in Figure 17B. Similarly, shoe 1701 may be returned to the concealed configuration by replacing the position of flap 1711.

The specific position of tracking mark 1703 may vary within the scope of the invention. In one embodiment, tracking mark 1703 may be positioned exclusively on the portion of upper 1705 that is covered by flap 1711. Pulling back flap 1711 will operate, therefore, to expose a second layer of upper 1705 that includes tracking mark 1703. In another embodiment, however, tracking mark 1703 may be positioned on the underside of flap 1711 and on the portion of upper 1705 that is covered by flap 1711. Pulling back flap 1711 will operate, therefore, to reveal the presence of tracking mark 1703 on both the second layer of upper 1705 and on the underside of flap 1711. In still further embodiments of the invention, flap 1711 may be located in other areas of shoe 1701, such as the heel area, the medial side, or the lateral side, for example.

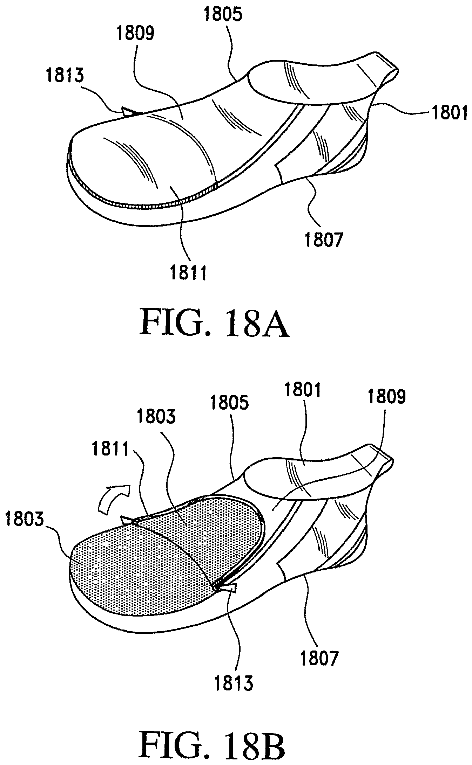

A shoe 1801 and tracking mark 1803 having a structure that is similar to shoe 1701 and tracking mark 1703 is depicted in Figures 18A and 18B. Shoe 1801 includes an upper 1805 and a sole 1807. Upper 1805 has an instep area 1809 that defines a flap 1811 for selectively covering and exposing tracking mark 1803. Whereas flap 1711 loosely covered instep area 1705 in the concealed configuration, flap 1811 includes a zipper 1813 that secures the position of flap 1811 over tracking mark 1803. Furthermore, shoe 1801 is depicted as including a portion of tracking mark 1803 on the underside of flap 1811.

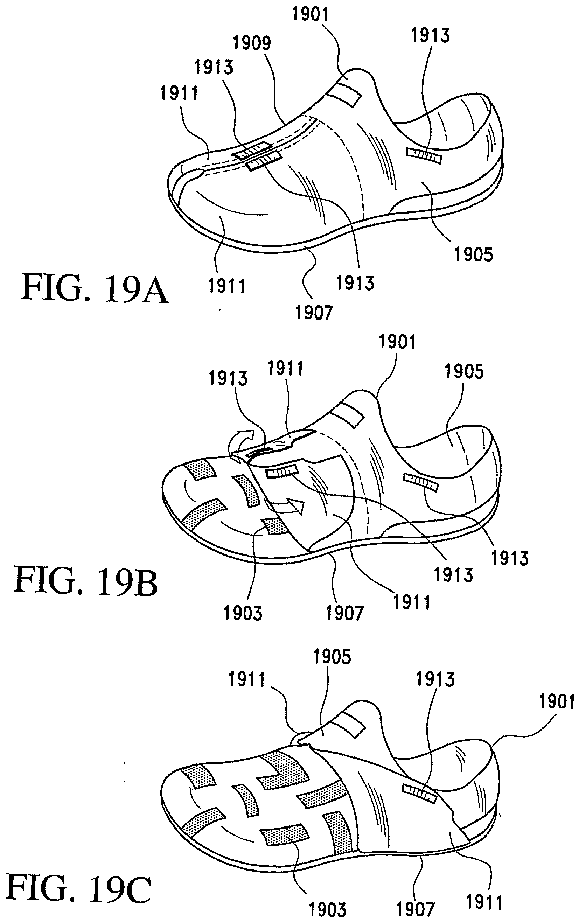

Another shoe 1901 and tracking mark 1903 is depicted in Figures 19A-19C. Shoe 1901 includes an upper 1905 and a sole 1907. Upper 1905 includes an instep area 1909 with a pair of flaps 1911 that may be folded back to reveal tracking mark 1703 on instep area 1909. Referring to Figure 19A, shoe 1901 is depicted in the concealed configuration, wherein flaps 1911 extend over tracking mark 1903 and prevent tracking mark 1903 from being detected by interactive computer game 203. In order to convert shoe 1901 to the exposed configuration, however, flaps 1911 are folded backwards, as depicted in Figures 19B and 19C.

A magnetic fastener 1913, for example, may be utilized to secure the position of flaps 1911 in both the concealed and exposed configuration. A portion of magnetic fastener 1913 is depicted as being located on both of flaps 1911, and a corresponding portion of magnetic fastener is depicted as being located adjacent the ankle opening of shoe 1901. When shoe 1901 is in the concealed configuration, the portions of magnetic fastener 1913 that are located on flaps 1911 may attract each other to secure to position of flaps 1911 over tracking mark 1903. When shoe 1901 is in the exposed configuration, however, the portions of magnetic fastener 1913 that are located on flaps 1911 may attract the corresponding portions that are adjacent the ankle opening, thereby securing flaps 1911 in the exposed configuration.

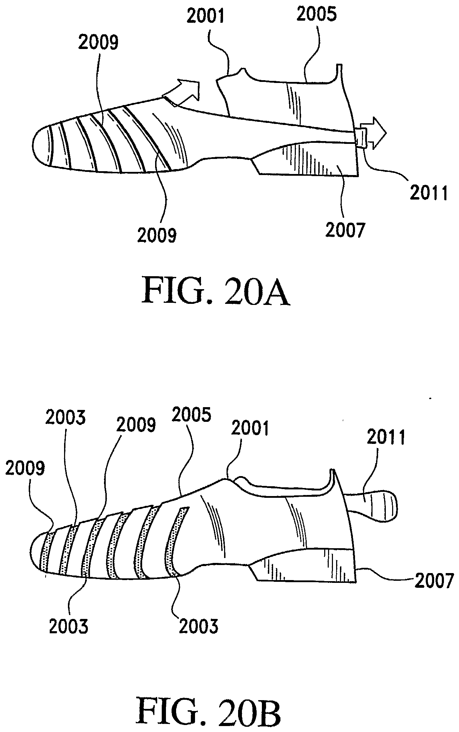

Another shoe 2001 and various tracking marks 2003 are depicted in Figures 20A-20B. Shoe 2001 includes an upper 2005 and a sole 2007. Upper 2005 includes a plurality of slits 2009 that are mechanically coupled to a drawstring 2011 extending from a heel area of shoe 2001. Tracking marks 2003 are positioned behind slits 2009. In the concealed configuration, edges of slits 2009 contact each other and conceal tracking marks 2003, as depicted in Figure 20A. In order to convert shoe 2001 from the concealed configuration to the exposed configuration, a portion of drawstring 2011 is drawn out of the heel area. This action operates to separate the edges of slits 2009, thereby revealing tracking marks 2003, as depicted in Figure 20B. Accordingly, tracking marks 2003 may be revealed by through manipulating the position of drawstring 2011.

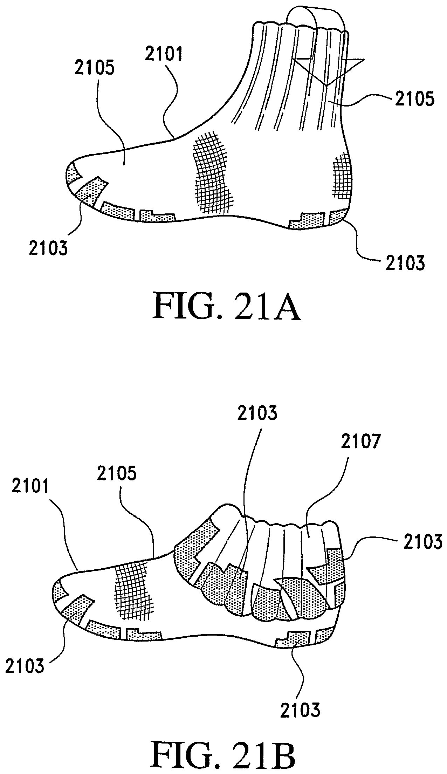

In addition to shoes, socks may be utilized in connection with tracking marks to provide interactive computer game 203 with data concerning the position of the feet. Referring to Figures 21A and 21B, a sock 2101 and tracking marks 2103 are depicted. Sock 2101 includes an exterior surface 2105 that faces away from the foot, and sock 2101 includes an interior surface 2107 that generally contacts the foot. Tracking marks 2103 are positioned on an ankle area of interior surface 2107. In the concealed configuration, which is depicted in Figure 21A, the ankle area extends along the ankle such that tracking marks 2103 are adjacent the ankle and are concealed from view. In order to convert sock 2101 from the concealed configuration to the exposed configuration, the ankle area may be folded downward, as depicted in Figure 21B, such that the ankle area is effectively turned outward to expose tracking marks 2103. In some embodiments of the invention, tracking marks 2103 may also be positioned on exterior surface 2105 such that wearing a shoe will provide effective concealment.

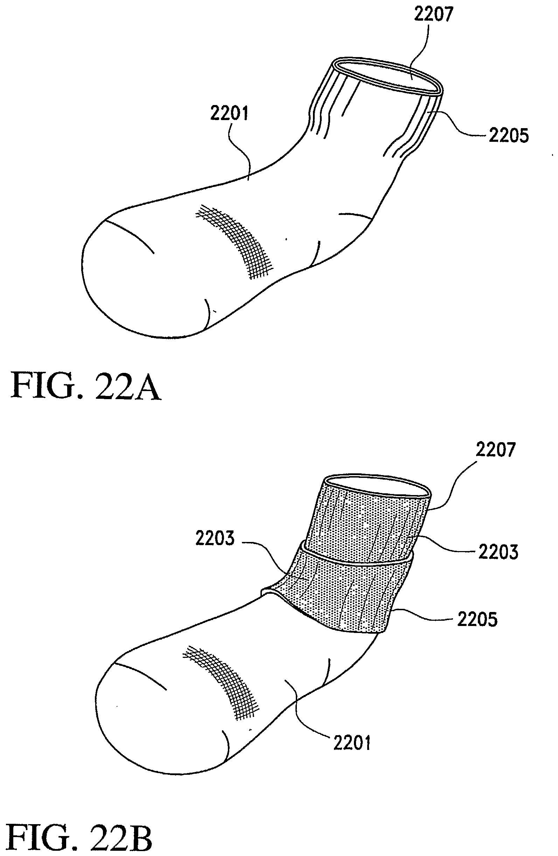

Another sock 2201 and tracking mark 2203 is depicted in Figures 22A and 22B. Sock 2201 includes an ankle area that has an exterior layer 2205 and an inner layer 2207 that are arranged in a concentric mariner. Tracking mark 2203 is positioned on adjacent surfaces of exterior layer 2205 and interior layer 2207. In the concealed configuration, as depicted in Figure 22A, layers 2205 and 2207 extend upward along the ankle and effectively conceal tracking marks 2203. In order to convert sock 2201 to the exposed configuration, exterior layer 2205 is folded downward, as depicted in Figure 22B.

Whereas footwear bearing tracking marks may be utilized to provide data concerning the position of the feet, some applications for interactive computer game 203 may require that the position of the head be detected. For example, an application that simulates the game of soccer may include game play that involves utilizing the head to direct the motion of a soccerball. Accordingly, apparel in the form of headwear, such as a hat or headband, may be utilized in conjunction with tracking marks to provide interactive computer game 203 with accurate data concerning the position of the head.

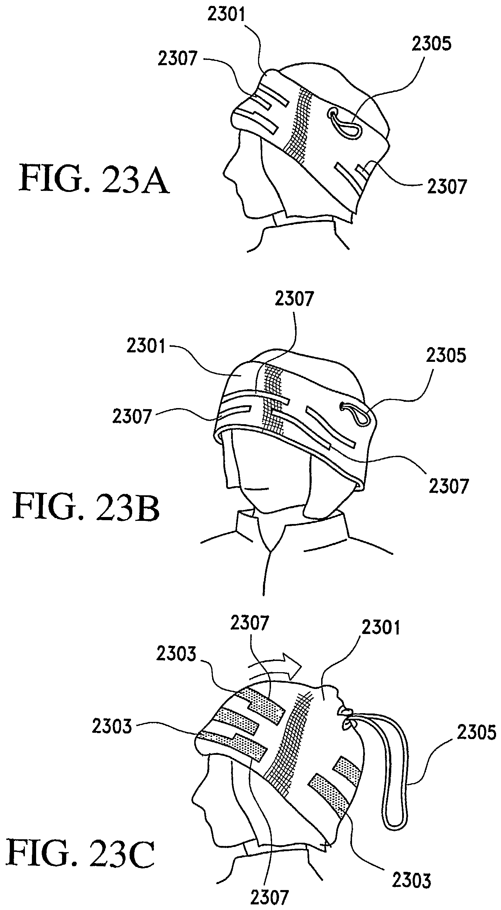

A hat 2301 and various tracking marks 2303 are disclosed in Figures 23A-23C. Hat 2301 has a generally cylindrical structure and includes a drawstring 2305 that extends around the head. In the concealed configuration, as depicted in Figures 23A and 23B, hat 2301 exposes the top of the head and includes a plurality of slits 2307 that are closed to conceal tracking marks 2303. In order to convert hat 2301 to the exposed configuration, drawstring 2305 is tightened such that hat 2301 stretches to the top of the head. The stretching of hat 2301 causes slits 2307 to separate and exposes tracking marks 2303, as depicted in Figure 23C.

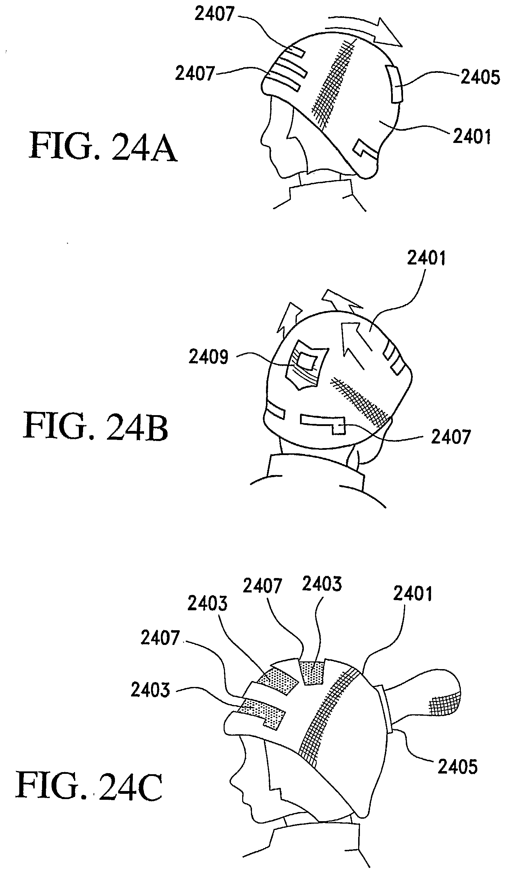

Another hat 2401 and various tracking marks 2403 are depicted in Figures 24A-24C. Hat 2401 includes an element 2405 that is positioned in an area that corresponds with a rear portion of the head. In the concealed configuration, which is depicted in Figures 24A and 24B, a plurality of slits 2407 are in a closed configuration and conceal tracking marks 2403. In order to convert hat 2401 to the exposed configuration, portions of hat 2401 are drawn through element 2405 so as to stretch hat 2401 over the head, as depicted in Figure 24C. The stretching of hat 2401 acts to separate slits 2407 and expose tracking marks 2403.

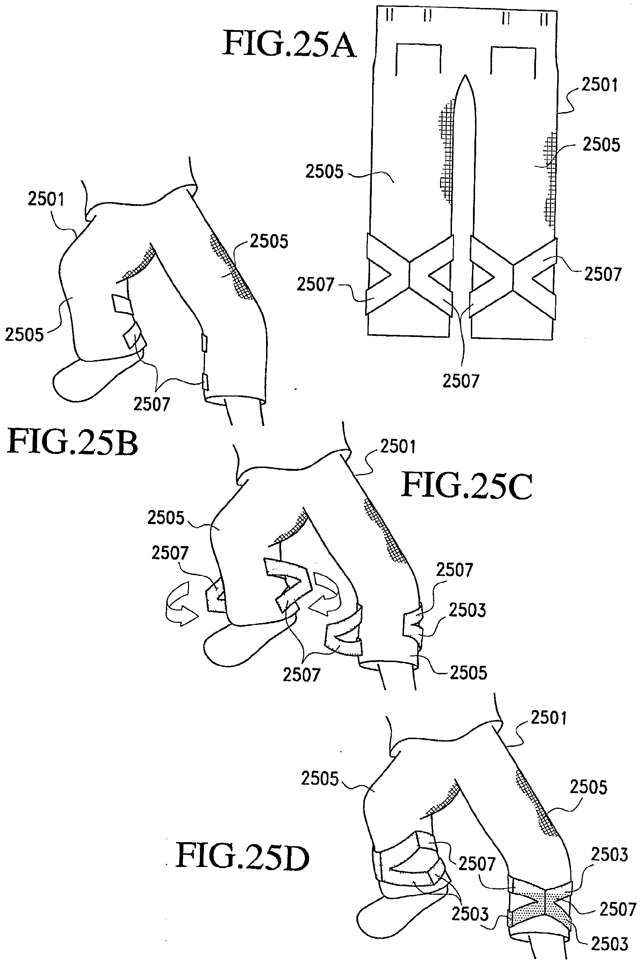

Additional examples of embodiments for shirts and pants will now be discussed. Referring to Figures 25A-25D a pair of pants 2501 and tracking marks 2503 are disclosed. Pants 2501 include a pair of leg portions 2505, with each leg portion 2505 having a pair of independent V-shaped straps 2507 that form an X-shaped structure. Each strap 2507 is secured to pants 2501 with a releasable fastener, such as a hook and loop fastener. In the concealed configuration, which is depicted in Figures 25A and 25B, straps 2507 are positioned on a back area of leg portions 2505, and tracking marks 2503 concealed by straps 2507. More particularly, tracking marks are positioned on the areas of straps 2507 that is concealed, and tracking marks 2503 are positioned on the areas of leg portions 2505 that are under straps 2507. In order to convert pants 2501 from the concealed configuration to the exposed configuration, straps 2507 are detached and extended around to a front area of leg portions 2505, as depicted in Figure 25C. This action exposes the area of straps 2507 were previously adjacent to leg portions 2505, thereby exposing tracking marks 2503, as depicted in Figure 25D.

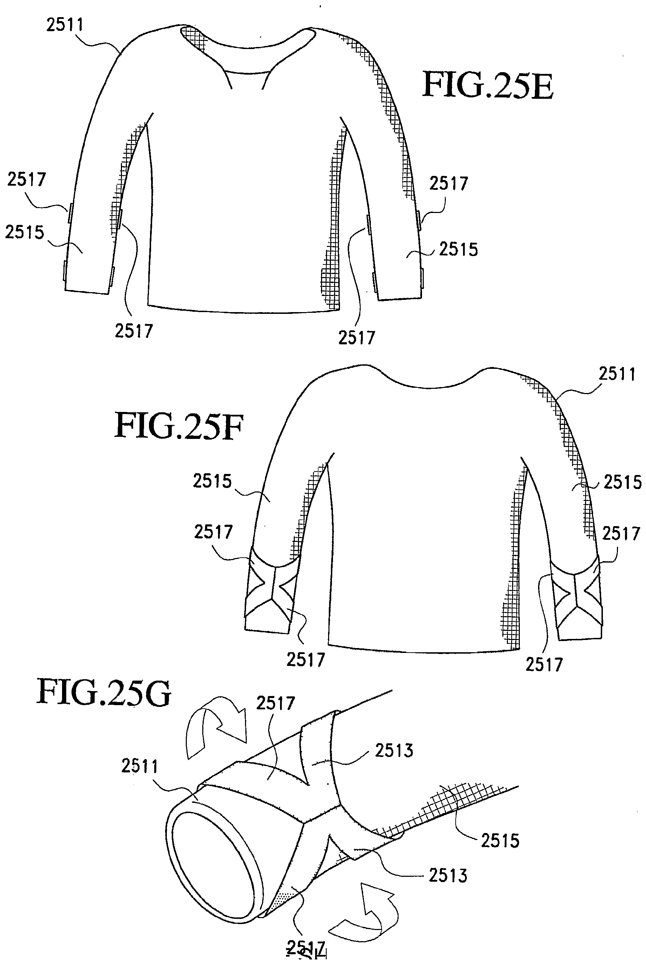

A similar structure may be applied to other apparel, such as a shirt 2511 and tracking marks 2513, which are disclosed in Figures 25E-25G. Shirt 2511 includes two sleeves 2515 that each have two V-shaped straps 2517. The concealed configuration of shirt 2511 is depicted in Figures 25E and 25F. Straps 2517 may be detached from a back area of shirt 2511, wrapped around sleeves 2515, and subsequently reattached to a front area of shirt 2511, thereby exposing tracking marks 2513 and placing shirt 2511 in the exposed configuration, as depicted by Figure 25G.

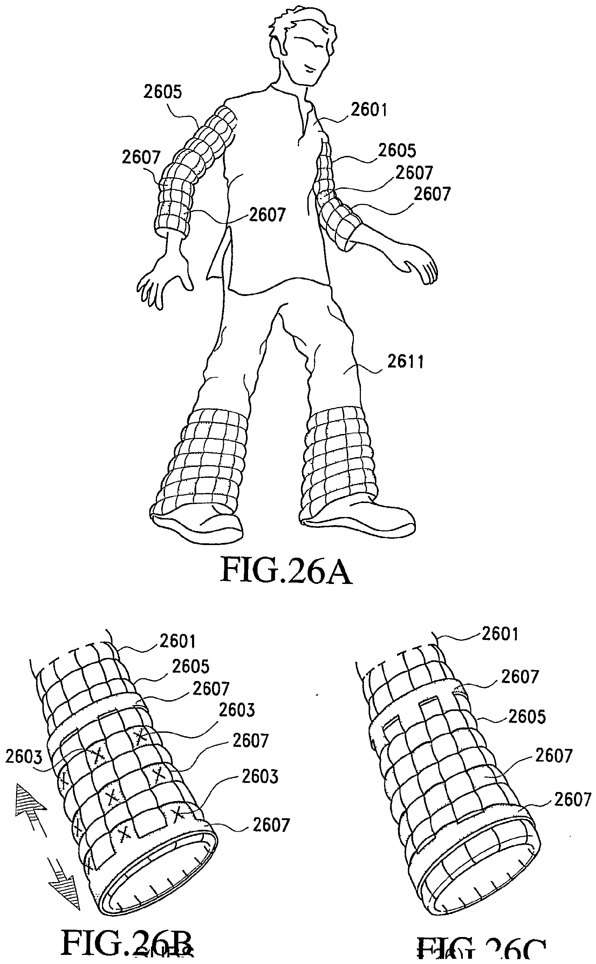

Apparel having a woven structure is depicted in Figures 26A-26C and includes a shirt 2601 and tracking marks 2603. Shirt 2601 includes two sleeves 2605 that are woven in a manner that incorporates an element 2607, which is woven into the structure of sleeves 2605 and includes tracking marks 2603. In operation, elements 2607 translate bidirectionally through a distance that is approximately equal to one line of weaving.

Accordingly, the process of moving or translating elements 2607 exposes areas of elements 2607 that were previously positioned under other portions of sleeves 2605. In the concealed configuration, which is depicted in Figures 26A and 26B, elements 2607 are in a first position and tracking marks 2603 are concealed. In order to convert shirt 2601 to the exposed configuration, elements 2607 are moved relative to sleeves 2605 and the portions of elements 2607 that include tracking marks 2603 are exposed. A similar configuration may also be utilized in a pair of pants 2611 having other tracking marks, which is also depicted in Figure 26A.

Many applications for interactive computer-game 203 will require data concerning the positions of the extremities, which include the arms and legs, in order to effectively track the movements of the individual. The various types of apparel discussed above, including the shirts, pants, and footwear, may be utilized to provide interactive computer game 203 with data concerning the positions of the extremities. Some individuals, however, may prefer to utilize a band structure, such as a wristband or ankleband, which bears tracking marks. The following discussion provides example of various bands that are discussed with reference to either the wrist or the ankle for purposes of illustration. One skilled in the relevant art will recognize, however, the general structure of the bands discussed herein are not limited to wrist and ankle applications, but may be applied to other areas of the body, including the elbows, knees, and upper arms, for example.

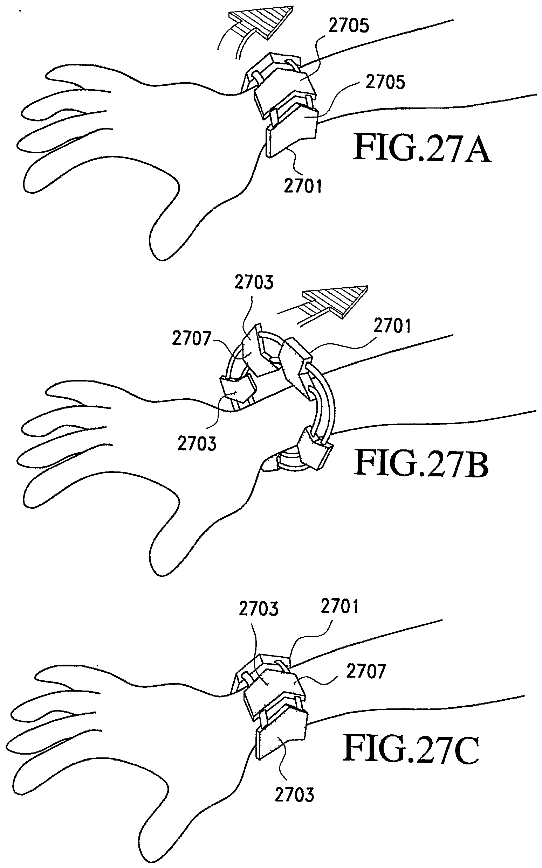

Apparel in the form of a band 2701 that bears tracking marks 2703 is depicted in Figures 27A-27C. Band 2701 includes a first surface 2705 and an opposite second surface 2707. First surface 2705 has properties that are not generally tracked by interactive computer game 203. Second surface 2707 includes tracking marks 2703 and is formed to have a contrast, color, shape, or reflectivity, for example, that is trackable by interactive computer game 203. Accordingly, the individual may wear band 2701 in the concealed configuration by placing band 2701 upon the body such that first surface 2705 faces outward and second surface 2707 contacts the body, as depicted in Figure 27A. In order to convert band 2701 to the exposed configuration, the individual merely flips band 2701 over, as depicted in Figures 27B and 27C, thereby exposing second surface 2707.

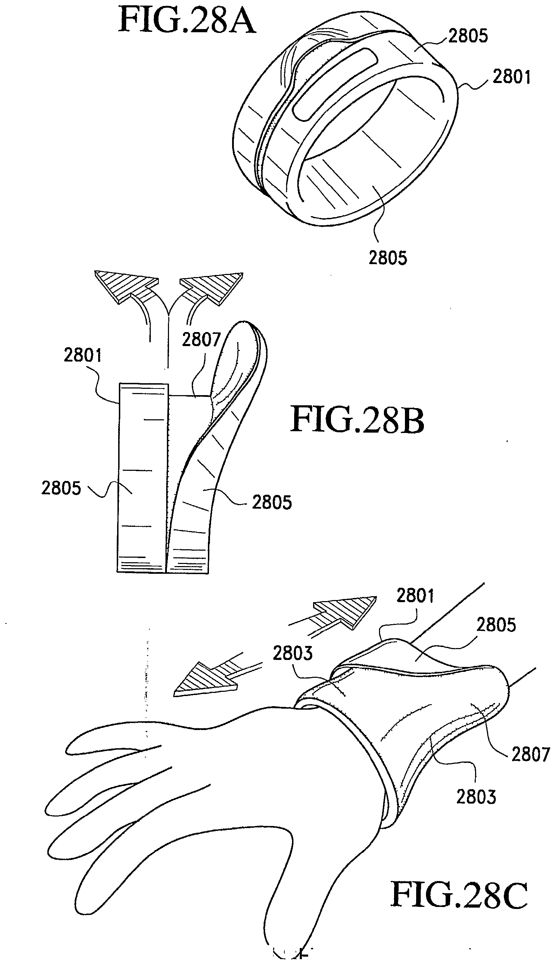

Another apparel embodiment in the form of a band 2801 that bears tracking marks 2803 is depicted in Figures 28A-28C. Band 2801 has a first surface 2805 and an opposite second surface 2807. The structure of band 2801 may be folded such that only first surface 2805 faces outward, or band 2801 may be unfolded such that second surface 2807 is exposed. First surface 2805 has properties that are not generally tracked by interactive computer game 203, and second surface 2807 includes tracking marks 2803. The individual may wear band 2801 in the concealed configuration by folding band 2801 in the manner depicted in Figure 28A. In order to convert band 2801 to the exposed configuration, the individual merely unfolds band 2801, as depicted in Figures 28B and 28C, thereby exposing second surface 2807.

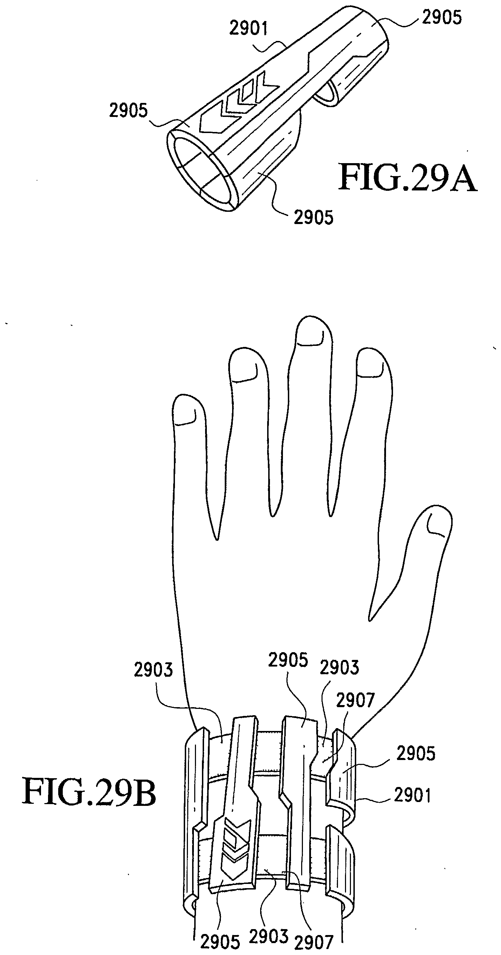

With reference to Figures 29A and 29B, apparel that includes a band 2901 and tracking marks 2903 is disclosed. Band 2901 includes a plurality of segments 2905 that are connected by an elastic material 2907, with tracking marks 2903 being positioned on elastic material 2907. Segments 2905 cooperate to form a ring with dimensions that extend securely around a finger. By applying outward pressure to band 2901, however, elastic material 2907 stretches and band 2901 may be placed around the wrist, for example. Band 2901 may be worn in the concealed configuration upon a finger such that tracking marks 2903 are not exposed, as depicted in Figure 29A. In order to convert band 2901 from the concealed configuration to the exposed configuration, however, elastic material 2907 is stretched and band 2901 placed around another portion of the body, thereby exposing tracking marks 2903, as depicted in Figure 29B.

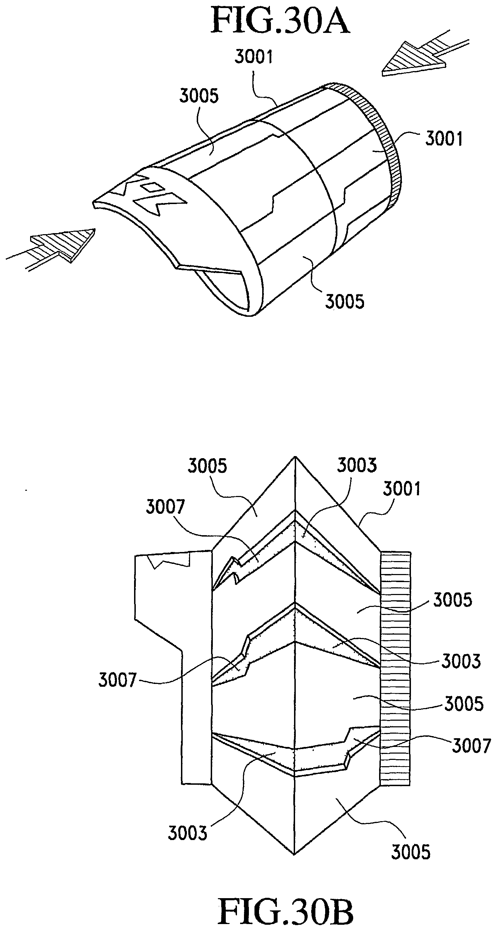

Apparel that includes a band 3001 and tracking marks 3003 is disclosed in Figures 30A and 30B. Band 3001 includes a plurality of segments 3005 that are connected by an elastic material 3007, with tracking marks 3003 being positioned on elastic material 3007. Segments 3005 have a structure that bends or flexes in a central area. By applying inward pressure to band 3001, segments 3005 will separate and protrude radially outward. Band 3001 may be worn in the concealed configuration, as depicted in Figure 30A. In order to convert band 3001 from the concealed configuration to the exposed configuration, however, segments 3005 are flexed and elastic material 3007 is exposed between the various segments 3005, as depicted in Figure 30B.

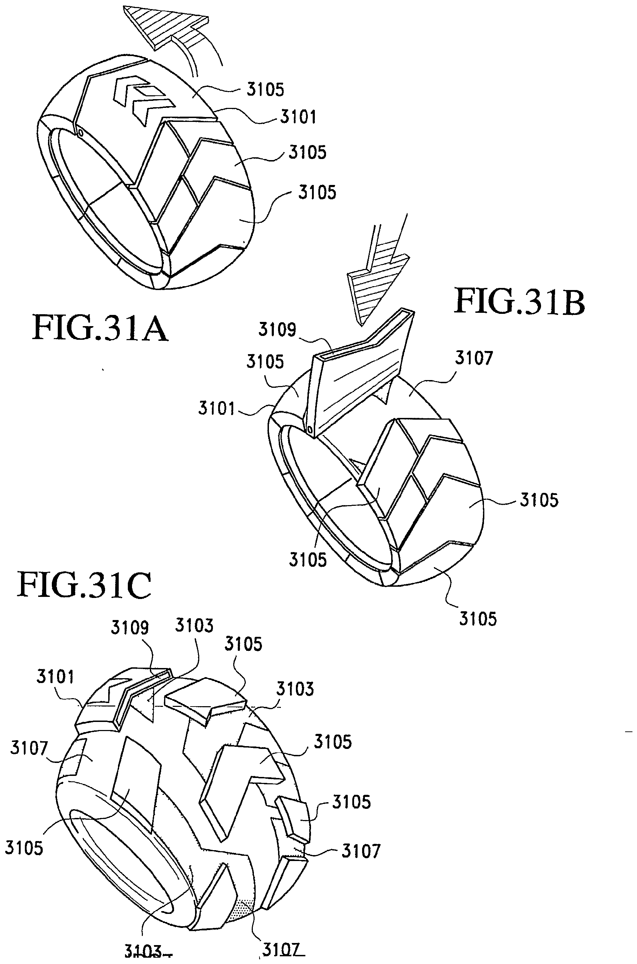

Apparel that includes a band 3101 and tracking marks 3103 is disclosed in Figures 31A-31C. Band 3101 includes a plurality of segments 3 105 that are connected by an inflatable structure 3107, with tracking marks 3103 being positioned on inflatable structure 3107. By increasing the fluid pressure within inflatable structure 3107, band 3101 will increase in size and segments 3105 will separate to expose tracking marks 3103. Band 3101 may be worn in the concealed configuration, as depicted in Figure 31A. In order to convert band 3101 from the concealed configuration to the exposed configuration, however, one of segments 3105 is lifted to expose an inlet 3109 for inflatable structure 3107, as depicted in Figure 31B. The individual then blows upon inlet 3109 to inflate band 3101, expose tracking marks 3103, and place band 3101 in the exposed configuration, as depicted in Figure 31C.

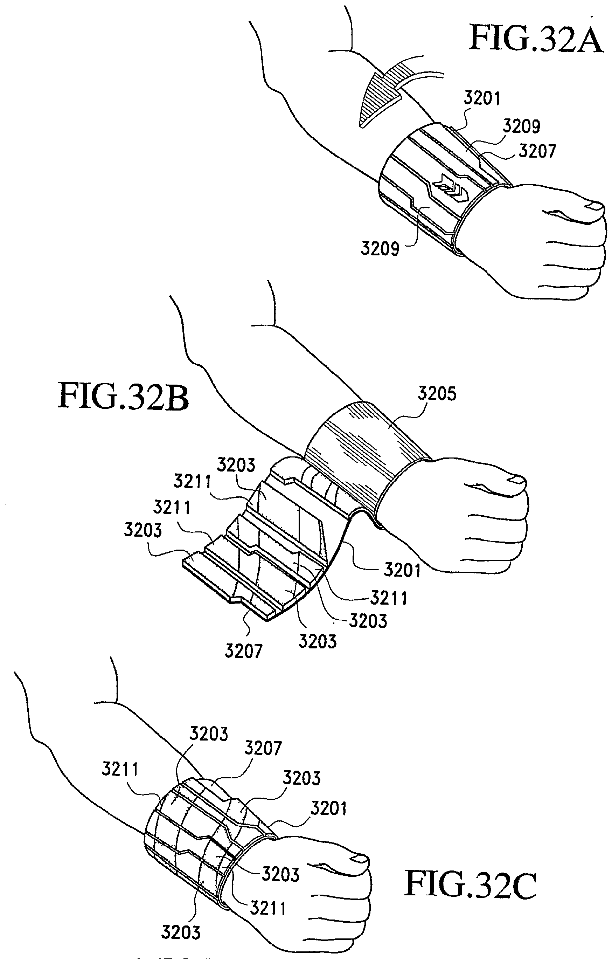

Referring to Figures 32A-32C apparel having a band 3201 and tracking marks 3203 is depicted. Band 3201 includes an cylindrical element 3205 that extends around a wrist, ankle, or other portion of the individual. Band 3201 also includes a flap 3207 that is detachable from element 3205. Flap 3207 includes a first surface 3209 and an opposite second surface 3211. First surface 3209 has properties that are not generally tracked by interactive computer game 203. Second surface 3211 includes tracking marks 3203 and is formed to have a contrast, color, shape, or reflectivity, for example, that is trackable by interactive computer game 203. Accordingly, the individual may wear band 3201 in the concealed configuration with first surface 3209 facing outward, as depicted in Figure 32A. In order to convert band 3201 to the exposed configuration, the individual merely reverses the orientation of flap 3207 such that second surface 3211 faces outward, as depicted in Figures 32B and 32C, thereby placing band 3201 in the exposed configuration.

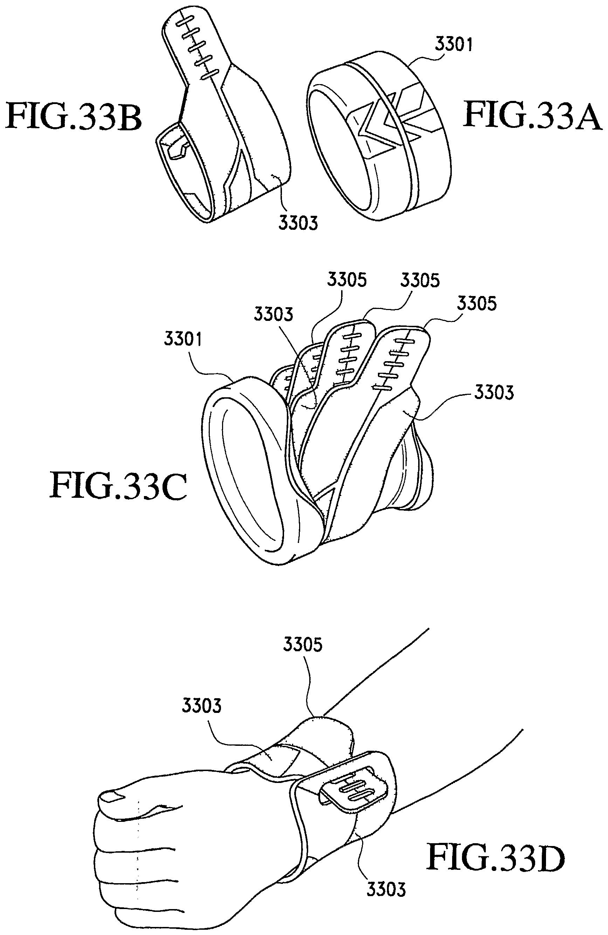

Another apparel embodiment in the form of a band 3301 that bears tracking marks 3303 is depicted in Figures 33A-33D. Band 3301 has a structure that is similar to band 2801, which was discussed above, except that a plurality of additional bands 3305 are positioned within band 3301. Additional bands 3305, which are depicted in Figure 33B, bear tracking marks 3303 and may be tracked by interactive computer game 203. Band 3301 may be worn in the concealed configuration, as depicted in Figure 33A, with additional bands 3305 located therein. In order to convert band 3301 to the exposed configuration, band 3301 is opened to reveal additional bands 3305, as depicted in Figure 33C. Additional bands 3305 are then wrapped around various extremities, for example, to expose tracking marks 3303, as depicted in Figure 33D.

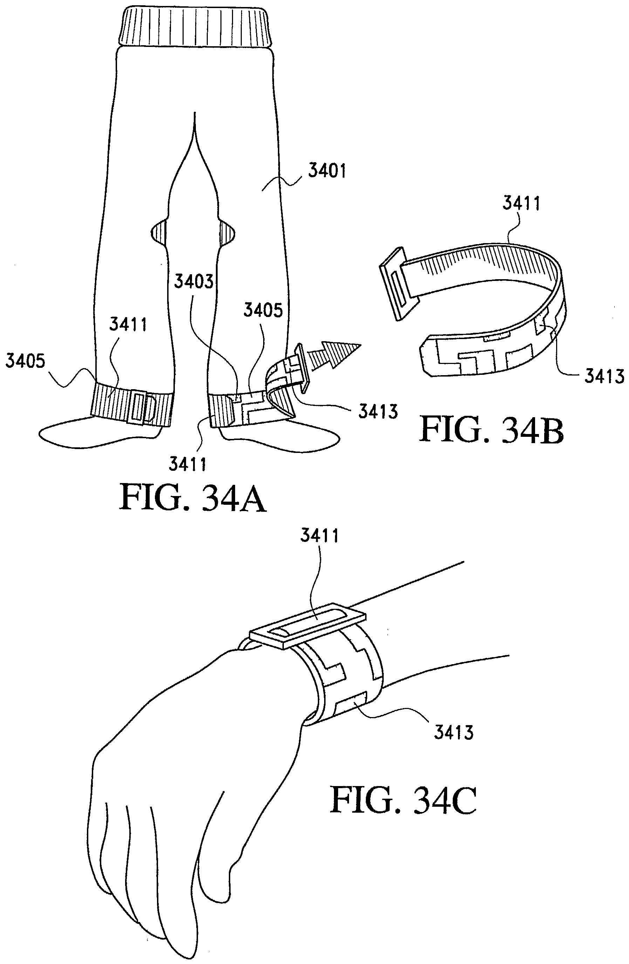

Various apparel types may also be combined, as in Figures 34A-34C, which discloses a pair of pants 3401 that bears tracking marks 3403 and also discloses a pair of bands 3411 that bear tracking marks 3413. Pants 3401 include a pair of cuff areas 3405. Bands 3411 are configured to extend around cuff areas 3405 and conceal tracking marks 3403, which are located on cuff areas 3405. In the concealed configuration, therefore, bands 3411 extend around cuff areas 3405. In order to convert pants 3401 and bands 3411 to the exposed configuration, bands 3411 are detached from cuff areas 3405, thereby exposing tracking marks 3403. Detaching bands from cuff areas 3405 also exposes tracking marks 3413, which are located on the sides of bands 3411 that were in contact with cuff areas 3405. Bands 3411 may be placed on the wrists, for example, with tracking marks 3413 facing outward during use of interactive computer game 203.

### Types Of Tracking Marks

As will be discussed in detail below, a wide variety of materials and mechanisms may be employed to form tracking targets for use with an interactive activity device. Some tracking targets may be passive tracking marks, which, for example, simply reflect a one or more frequencies of electromagnetic radiation. The electromagnetic radiation may be ambient or projected from the interactive activity device. For example, in the above described examples of the invention, the tracking marks may be formed by creating a shape with a distinctive color, brightness or shade on an apparel of wear.

With some embodiments of the invention, the tracking marks may be formed of a conventional reflective material, such as a dye or other coloring material that reflects one or more specific wavelengths, and absorbs other wavelengths. Alternately or additionally, the tracking marks may be formed from retroreflective material. As known in the art, a retroreflective surface includes a mirrored layer and a retroreflective sheeting layer over the mirrored player. The retroreflective sheeting layer may be formed of tiny cube or prism elements, or it may be formed of transparent beads. When an incident light ray strikes the bead, it is reflected toward the center axis (perpendicular to the mirrored layer) of the bead. When the incident light ray is then reflected from the mirrored surface, it exits the bead in a direction generally parallel to that of the incident light ray. Thus, retroreflective surfaces will reflect incident light in generally the same direction from which it originated. Of course, there will be some deviation between the direction of the incident light ray and its corresponding reflected light ray. This deviation is referred to as the observation angle.

In many of the above-described examples of the invention, the tracking marks are formed of substantially two-dimensional surfaces. It should be noted, however, that various embodiments of the invention may employ three-dimensional tracking marks. For example, raised shapes, such as pyramidal or hemispherical shapes can be used as tracking marks for various embodiments of the invention. Advantageously, three-dimensional tracking marks may allow the marks to be visible to the interactive activity device from a variety of angles and directions.

Alternately, tracking targets may be active. An active tracking target may, for example, be an electronic device that transmits a signal over one or more frequencies of electromagnetic radiation. For example, an active tracking target may transmit a light signal, and infrared signal, an ultrasound signal or a radio signal to the interactive activity device. This signal can then be received by the interactive activity device and used to determine the position of the tracking target using, for example, triangulation.

Still further, some active tracking targets according to various embodiments of the invention may detect movement of the user, and then transmit the detected information to the interactive activity device. For example, according to some embodiments of the invention, apparel, such as footwear, may include one or more accelerometers for detecting the speed and/or direction of a user's arm, leg, or other extremity, or even for detecting the speed and/or direction of the user himself or herself. Accelerometers positioned in footwear may also be used to detect, for example, when a user places his or her foot down against a surface, the force with which a user places his or her foot down against a surface, or both. With these types of tracking targets, the accelerometers may be coupled with a transmitter, so that the information detected by the accelerometers may be transmitted to the interactive activity device for determining the user's motion.

With various embodiments of the invention, some tracking targets may be intelligent in addition to being active. This type of tracking target, may, for example, determine its own position relative to the interactive activity device, and provide that position information directly to the interactive activity device. For example, some electronic devices may now be capable of using electromagnetic signals to triangulate the position of the electronic devices to within a few inches. Accordingly, these types of electronic devices may be used to determine the position of user's hand, arm, foot, leg or other body part, or even the position of the user himself or herself. This position information can then be transmitted to the interactive activity device. The interactive activity device can use the position information to determine the user's movement.

### Method Of Manufacturing Apparel With A Tracking Mark

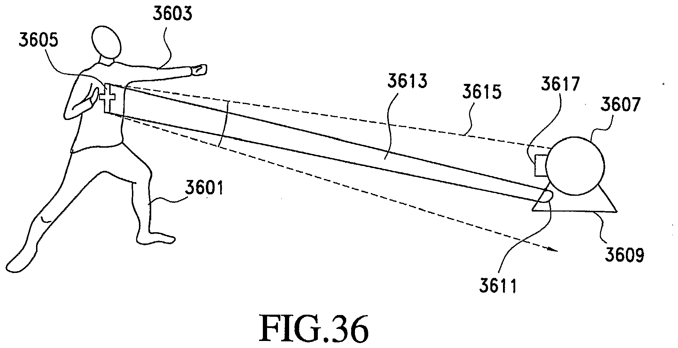

The method of manufacturing apparel bearing tracking marks, such as the shirt 101, according to various embodiments of the invention is illustrated in Figure 36. In the illustrated embodiment, the method is for manufacturing apparel for use with a game, but it should be appreciated that this method can be adopted to manufacture apparel for any type of interactive device 203. As seen in this figure, in step 3601, the apparel manufacturer analyzes the interactive game 203 with which the apparel bearing the tracking marks will be employed. More particularly, the apparel manufacturer determines the type of tracking mark or marks that the apparel should have in order to allow the interactive game 203 to properly track the user's movements. This information regarding the types of suitable tracking marks may be obtained directly from the manufacture of the interactive game 203, or it may be obtained by studying the components of the interactive game 203, such as the software code of the interactive game 203 (for example, the software code of the tracking mark recognition module 211).

For example, as illustrated in Figure 1, the shirt 101 bears specific shapes (that is, cross shapes) that the interactive game 203 can easily identify as tracking marks. With alternate embodiments of the invention, however, the interactive game may distinguish tracking marks of specific colors rather than specific shapes. For example, with some embodiments of the invention, the interactive game may more easily identify a tracking mark having the color red from a blue background of the apparel than a tracking mark having a particular shape. Alternately, or additionally, some interactive games may better distinguish reflective tracking marks than tracking marks that simply have a high contrast with respect to the apparel on which they are placed. For example, with some embodiments of the invention, the interactive game may employ an electromagnetic wave transmitter, such as an infrared, visible light or sonic transmitter, together with one or more detectors for detecting the reflection of these electromagnetic waves. The tracking marks can then be formed of a material that is particularly reflective of the appropriate type of electromagnetic wave.

Further, some interactive games may track only the player's position. With these games, the piece of apparel might require only a single tracking mark located in a central position on the apparel. Moreover, the interactive game may actually track the movement of each of the player's extremities. With this type of interactive game, the apparel might require multiple tracking marks, such as one on each sleeve of a shirt, or on each leg of a pair of pants.

After the manufacturer has determined the appropriate tracking mark or marks to be applied to the apparel, the manufacture manufactures the apparel with those tracking marks in step 3603. As discussed in detail above, the manufacturer can manufacture the apparel to inherently include the tracking marks, or the manufacturer may apply the tracking marks to the apparel after the apparel is created. Next, in step 3605, the manufacturer makes the apparel available to a wearer who intends to play the interactive game studied by the manufacturer. Then, in step 3607, the player 201 obtains the apparel bearing the tracking marks from the manufacturer. In step 3609, the player 201 begins wearing the apparel bearing the tracking marks, and, in step 3611, begins playing the interactive game studied by the manufacturer while wearing the apparel with the tracking marks.

As discussed above, the apparel employing the tracking marks may be of any desired type. For example, with some embodiments of the invention, the apparel can include shirts, such as long sleeve shirts and sleeve shirts, jackets, pants, shorts, socks, and hat. The apparel can also include footwear. Still further, the apparel may be a hand-held object, such as a weight or piece of sports equipment, a band, such as a band that may be worn around the player's wrist, chest or ankles, or a sticker that may be applied to apparel that the player already possesses.

### Retroreflective Tracking Marks

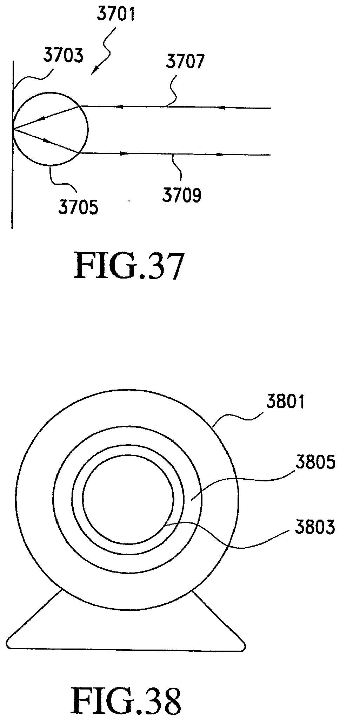

Figure 37 illustrates yet another embodiment of the invention, which employs one or more retroreflective tracking marks to assist an interactive game in tracking the movements of a player. As seen in this figure, the player 3701 is wearing a shirt 3703 that bears a chest tracking mark 3705. The tracking mark 3705 is formed of retroreflective material. As is known in the art, retroreflective material is a material that reflects light back in the direction of its source.

More particularly, the operation of retroreflectivity will be discussed briefly with reference to Figure 38. As will be appreciated by those of ordinary skill in the art, materials typically will reflect in one of two ways. First, a surface may diffusely reflect incident light. That is, if incident light strikes a diffusive surface at a particular angle, the surface will reflect that incident light in multiple directions, and not produce a clear reflection of the incident light. Second a surface may provide a specular or mirror reflection. With this type of surface, if incident light strikes the surface at a particular angle, the surface will reflect the incident light at the opposite angle. With retroreflective surfaces, however, the incident light is reflected in generally the same direction from which it originated.

As known in the art, a retroreflective surface includes a mirrored layer 3803 and a retroreflective sheeting layer over the mirrored player 3803. The retroreflective sheeting layer may be formed of tiny cube or prism elements, or it may be formed of transparent beads, such as the sphere 3805 shown in Figure 38. As seen in this figure, when an incident light ray 3807 strikes the bead 3805, it is reflected toward the center axis (perpendicular to the mirrored layer 3803) of the bead 3805. When the incident light ray 3807 is then reflected from the mirrored surface 3803, it exits the bead 3805 in a direction generally parallel to that of the incident light ray 3807. Thus, retroreflective surfaces will reflect incident light in generally the same direction from which it originated. Of course, there will be some deviation between the direction of the incident light ray and its corresponding reflected light ray. This deviation is referred to as the observation angle.

Returning now to Figure 37, the interactive game being used by the player 3701 employs a camera 3707 to take advantage of the retroreflectivity of the tracking mark 3705. The camera 3707 includes a stand 3709 having a light source 3711 mounted thereon. When a beam of incident light 3713 is directed from the light source 3711, the tracking mark 3705 reflects the incident light 3713 in a beam of reflected light 3715. The direction of the reflected light beam 3715 is back toward the light source 3711. Because the camera lens 3717 is relatively close to the light source 3711, it is within the observation angle for light reflected from the light source 3711.

Thus, the camera lens 3717 will image the light from the light source 3711 reflected by the retroreflective tracking mark 3705. As will be appreciated by those of ordinary skill in the art, however, other observers standing outside of the observation angle will not view the reflected light 3715 from the retroreflective tracking mark 3705. Instead, to these observers, the tracking mark 3705 will simply appear as a somewhat shiny mark. Moreover, because of the high reflectivity of the retroreflective tracking mark 3705, the image of the tracking mark 3705 will be strongly distinguished from its surrounding background, such as the background provided by the shirt 3703. This will assist the interactive computer game in recognizing the tracking mark 3705 from its background.

Of course, it will be appreciated that the light source 3711 need not be mounted on the stand 3709 of the camera 3707 in order for the camera 3707 to be within the observation angle for light reflected from the light source 3711. Instead, as will be apparent to those of ordinary skill in the art, the area encompassed by the observation angle for light reflected from the retroreflective tracking mark 3705 will depend upon the distance from the light source 3711 to the tracking mark 3705. Whether or not the camera 3707 will be within the area encompassed by the observation angle will also depend upon the distance of the camera 3707 to the retroreflective tracking mark 3705.

Figure 39 illustrates one embodiment of a camera 3901 that typically ensures that the images obtained by the camera 3901 will include light from within the observation angle of light reflected from a retroreflective tracking mark. The camera 3901 includes a camera lens 3903 and a light source 3905. As seen in Figure 39, the light source 3905 encircles the lens 3903. Thus, any light from the light source 3905 will be retroreflected back to the camera lens 3903. That is, in almost all situations, the camera lens 3903 will be within the observation angle of light reflected from the light source 3905. Of course, as will be appreciated by those of ordinary skill in the art, the radial distance between the lens 3903 and the light source 3905 can be modified based upon the expected distance to the retroreflective tracking mark. In most situations, the interactive computer game will typically specify a depth of a playing area. Thus, the intended depth of the playing area can be taken into account when spacing the light source 3905 from the lens 3903.

It should be noted that, in addition to the light source/lens configurations shown in Figures 37 and 39, a variety of other configurations are also possible. For example, the light source 3905 may only partially encircle the camera lens 3903. Alternately, the light source 3905 may be mounted with a different support than the mount for the camera. A wide variety of positioning and mounting options are separately available for the light source 3905 and the camera lens 3903 that will still maintain the camera lens 3903 within the observation angle for light reflected by a retroreflective target from the light source 3905.

## Claims

1. A method of providing an interactive gaming experience on an interactive activity device (203), comprising:
providing an article of wear (101) displaying a first tracking mark (103-107);
receiving images of the article of wear (101);
recognizing from the images a position of the first tracking mark (103-107) displayed on the article of wear at a first location;
recognizing from the images a position of the first tracking mark (103-107) displayed on the article of wear at a second location; and
displaying a game action in response to a change in position of the first tracking mark (103-107) from the first location to the second location,
wherein the article of wear (101) is convertible between a concealed configuration where the first tracking mark (103-107) is concealed by a portion of the article of wear (101) and an exposed configuration where the first tracking mark (103-107) is exposed, wherein the first tracking mark (103-107) when concealed is not trackable by an interactive computer game (203), and wherein the first tracking mark (103-107) when exposed is trackable by the interactive computer game (203), and
**characterized in that**:
(1) the article of wear (101) includes a first aperture that is convertible between an open position and a closed position, wherein the first aperture, when in the open position, exposes the first tracking mark (103-107), and wherein the first aperture, when in the closed position, conceals the first tracking mark (103-107); or
(2) the article of wear (101) includes at least two layers of material, wherein the at least two layers of material include an outer layer and an inner layer, wherein the outer layer extends over the inner layer, wherein the inner layer contains the first tracking mark (103-107), wherein the outer layer can be rolled up or folded up, or rolled down or folded down, and wherein the method further includes:
rolling up or folding up the outer layer to thereby expose the inner layer and expose the first tracking mark (103-107), and
rolling down or folding down the outer layer to thereby conceal the inner layer and conceal the first tracking mark (103-107); or
(3) the article of wear (101) includes a first tab secured to the first tracking mark (103-107), wherein the first tab, when pulled, converts the first tracking mark (103-107) from being concealed to being exposed; or
(4) the article of wear (101) includes a first drawstring secured to the piece of apparel, wherein the first drawstring, when pulled, converts the first tracking mark (103-107) from being concealed to being exposed; or
(5) the article of wear (101) includes a first zipper that is convertible between an open position and a closed position, wherein the first zipper, when in the open position, exposes the first tracking mark (103-107), and wherein the first zipper, when in the closed position, conceals the first tracking mark (103-107); or
(6) the article of wear (101) is a shirt that includes a first sleeve, wherein the first sleeve has a first surface and a second surface, wherein the first surface has properties that make it not trackable by the interactive computer game (203), and wherein the second surface includes the first tracking mark (103-107); or
(7) the first sleeve is detachable from the shirt to thereby provide a system for converting the first tracking mark (103-107) between being concealed and being exposed, wherein the first sleeve is attached to the shirt with the first surface facing outward to conceal the first tracking mark (103-107) and wherein the first sleeve is attached to the shirt with the second surface facing outward to expose the first tracking mark (103-107); or
(8) the first sleeve has a cuff area, wherein the cuff area provides a system for converting the first tracking mark (103-107) between being concealed and being exposed by providing at least one overlapping section, wherein the at least one overlapping section includes a piece of material and at least one fastener, and wherein the piece of material, when folded backward and fastened using the at least one fastener, exposes the first tracking mark (103-107); or
(9) the article of wear (101) includes at least two layers of material, wherein the at least two layers of material include an outer layer and an inner layer, wherein the outer layer extends over the inner layer, wherein the inner layer contains the first tracking mark (103-107), wherein the inner layer can be stretched out or retracted in, wherein the inner layer, when stretched out, exposes the inner layer and exposes the first tracking mark (103-107), and wherein the inner layer, when retracted in, conceals the inner layer and conceals the first tracking mark (103-107); or
(10) the article of wear (101) includes a first strap, wherein the first strap includes a releasable fastener to secure to the article of wear (101), wherein the first strap includes a tracking mark containing side and a non-tracking mark containing side, wherein two portions of the first strap have their tracking mark containing sides located facing one another to conceal the first tracking mark (103-107), and wherein the two portions of the first strap have the non-tracking mark containing sides facing a material of the article of wear (101) to expose the first tracking mark (103-107).

2. The method of providing an interactive gaming experience recited in claim 1, wherein the recognizing includes recognizing the positions of the first tracking mark by distinguishing a color of the first tracking mark from one or more colors of the article of wear (101).

3. The method of providing an interactive gaming experience recited in claim 1, wherein the recognizing includes recognizing the positions of the first tracking mark by distinguishing a shape of the first tracking mark.

4. The method of providing an interactive gaming experience recited in claim 1, wherein the recognizing includes recognizing the positions of the first tracking mark by distinguishing a reflectivity of the first tracking mark from a reflectivity of the article of wear (101).

5. The method of providing an interactive gaming experience recited in claim 1, further comprising:
recognizing qualitative information from movement of the first tracking mark, wherein the qualitative information is interpreted by an interactive computer game as an instruction selected from the group of: an instruction to turn off the game, an instruction to change a type or characteristic of the game, and an instruction to input alphanumeric information; and
changing an aspect of the game in response to recognizing the qualitative information from the movement of the first tracking mark.

6. A system, comprising:
an interactive computer game (203); and
a piece of apparel (101) arranged to be used with the interactive computer game (203), the piece of apparel (101) comprising:
an article of wear (101);
a first tracking mark (103 - 107) included on the article of wear (101), the first tracking mark (103-107) being recognizable by an interactive computer game (203); and
a system for converting the article of wear (101) between a concealed configuration where the first tracking mark (103-107) is concealed by a portion of the article of wear (101) such that it is not trackable by the interactive computer game (203) and an exposed configuration where the first tracking mark (103-107) is exposed such that it is trackable by the interactive computer game (203),
**characterized in that**:
(1) the system for converting the article of wear (101) between the concealed configuration and the exposed configuration includes a first aperture that is convertible between an open position and a closed position, wherein the first aperture, when in the open position, exposes the first tracking mark (103-107), and wherein the first aperture, when in the closed position, conceals the first tracking mark (103-107); or
(2) the system for converting the article of wear (101) between the concealed configuration and the exposed configuration includes at least two layers of material, wherein the at least two layers of material include an outer layer and an inner layer, wherein the outer layer extends over the inner layer, wherein the inner layer contains the first tracking mark (103-107), wherein the outer layer can be rolled up or folded up, or rolled down or folded down, wherein the outer layer, when rolled up or folded up, exposes the inner layer and exposes the first tracking mark (103-107), and wherein the outer layer, when rolled down or folded down, conceals the inner layer and conceals the first tracking mark (103-107); or
(3) the system for converting the article of wear (101) between the concealed configuration and the exposed configuration includes a first tab secured to the first tracking mark (103-107), wherein the first tab, when pulled, converts the first tracking mark (103-107) from being concealed to being exposed; or
(4) the system for converting the article of wear (101) between the concealed configuration and the exposed configuration includes a first drawstring secured to the piece of apparel, wherein the first drawstring, when pulled, converts the first tracking mark (103-107) from being concealed to being exposed; or
(5) the system for converting the article of wear (101) between the concealed configuration and the exposed configuration includes a first zipper that is convertible between an open position and a closed position, wherein the first zipper, when in the open position, exposes the first tracking mark (103-107), and wherein the first zipper, when in the closed position, conceals the first tracking mark (103-107); or
(6) the article of wear (101) is a shirt that includes a first sleeve, wherein the first sleeve has a first surface and a second surface, wherein the first surface has properties that make it not trackable by the interactive computer game (203), and wherein the second surface includes the first tracking mark (103-107); or
(7) the first sleeve is detachable from the shirt to thereby provide the system for converting the article of wear (101) between the concealed configuration and the exposed configuration, wherein the first sleeve is attached to the shirt with the first surface facing outward to conceal the first tracking mark (103-107), and wherein the first sleeve is attached to the shirt with the second surface facing outward to expose the first tracking mark (103-107); or
(8) the first sleeve has a cuff area, wherein the cuff area provides the system for converting the article of wear (101) between the concealed configuration and the exposed configuration by providing at least one overlapping section, wherein the at least one overlapping section includes a piece of material and at least one fastener, and wherein the piece of material, when folded backward and fastened using the at least one fastener, exposes the first tracking mark (103-107); or
(9) the system for converting the article of wear (101) between the concealed configuration and the exposed configuration includes at least two layers of material, wherein the at least two layers of material include an outer layer and an inner layer, wherein the outer layer extends over the inner layer, wherein the inner layer contains the first tracking mark (103-107), wherein the inner layer can be stretched out or retracted in, wherein the inner layer, when stretched out, exposes the inner layer and exposes the first tracking mark (103-107), and wherein the inner layer, when retracted in, conceals the inner layer and conceals the first tracking mark (103-107); or
(10) the system for converting the article of wear (101) between the concealed configuration and the exposed configuration includes a first strap, wherein the first strap includes a releasable fastener to secure to the article of wear (101), wherein the first strap includes a tracking mark containing side and a non-tracking mark containing side, wherein two portions of the first strap have their tracking mark containing sides located facing one another to conceal the first tracking mark (103-107), and wherein the two portions of the first strap have the non-tracking mark containing sides facing a material of the article of wear (101) to expose the first tracking mark (103-107).

7. The system recited in claim 6, wherein the first tracking mark is recognizable by the interactive computer game based upon a color of the first tracking mark.

8. The system recited in claim 6, wherein the first tracking mark is recognizable by the interactive computer game based upon a shape of the first tracking mark.

9. The system recited in claim 6, wherein the first tracking mark is recognizable by the interactive computer game based upon a reflectivity of the first tracking mark.

## Patentansprüche

1. Verfahren, um auf einem interaktiven Aktivitätsgerät (203) ein interaktives Spielerlebnis anzubieten, umfassend:
Ein Kleidungsstück (101) mit einem ersten Verfolgungszeichen (103-107) bereitstellen;
Bilder des Kleidungsstücks (101) empfangen;
den ersten Standort des ersten auf dem Kleidungsstück dargestellen Verfolgungszeichens (103-107) anhand der Bilder erkennen;
den zweiten Standort des ersten auf dem Kleidungsstück dargestellen Verfolgungszeichens (103-107) anhand der Bilder erkennen; und
eine Spielaktion anzeigen, wenn sich die Position des ersten Verfolgungszeichens (103-107) vom ersten Standort zum zweiten Standort bewegt;
wobei das Kleidungsstück (101) zwischen einer verdeckten Konfiguration (bei der das erste Verfolgungszeichen (103-107) durch einen Teil des Kleidungsstücks (101) verdeckt ist) und einer freiliegenden Konfiguration (bei der das erste Verfolgungszeichen (103-107) offen liegt) konvertierbar ist, wobei das erste Verfolgungszeichen (103-107) durch das interaktive Computerspiel (203) nicht verfolgt werden kann, wenn es verborgen ist und wobei das erste Verfolgungszeichen (103-107) durch das interaktive Computerspiel (203) verfolgt werden kann, wenn es offen liegt; und
**dadurch gekennzeichnet, dass**:
(1) das Kleidungsstück (101) eine erste Öffnung aufweist, die zwischen einer offenen Position und einer geschlossenen Position konvertierbar ist, wobei die erste Öffnung das erste Verfolgungszeichen (103-107) freigibt, wenn sie geöffnet ist und wobei die erste Öffnung das erste Verfolgungszeichen (103-107) verdeckt, wenn sie geschlossen ist; oder
(2) das Kleidungsstück (101) mindestens zwei Materialschichten aufweist, wobei die zwei Materialschichten eine Außenschicht und eine Innenschicht aufweisen, wobei sich die Außenschicht über die Innenschicht erstreckt, wobei die Innenschicht das erste Verfolgungszeichen (103-107) umfasst, wobei die Außenschicht eingerollt oder zusammengeklappt oder ausgerollt oder ausgeklappt werden kann und wobei das Verfahren ferner umfasst:
die Außenschicht einrollen oder zusammenklappen, damit die Innenschicht und damit das erste Verfolgungszeichen (103-107) freigelegt werden; und
die Außenschicht ausrollen oder ausklappen, damit die Innenschicht und damit das erste Verfolgungszeichen (103-107) verdeckt werden; und
(3) das Kleidungsstück (101) eine am ersten Verfolgungszeichen (103-107) befestigte erste Lasche umfasst, wobei die erste Lasche das erste Verfolgungszeichen (103-107) verdeckt oder freilegt, wenn an ihr gezogen wird; oder
(4) das Kleidungsstück (101) einen am Kleidungsstück befestigten ersten Kordelzug umfasst, wobei der erste Kordelzug das erste Verfolgungszeichen (103-107) verdeckt oder freilegt, wenn an ihm gezogen wird; oder
(5) das Kleidungsstück (101) einen ersten Reißverschluß aufweist, der zwischen einer offenen Position und einer geschlossenen Position konvertierbar ist, wobei der erste Reißverschluß das erste Verfolgungszeichen (103-107) freigibt, wenn er geöffnet ist und wobei der erste Reißverschluß das erste Verfolgungszeichen (103-107) verdeckt, wenn er geschlossen ist; oder
(6) das Kleidungsstück (101) ein Hemd mit einem ersten Ärmel ist, wobei der erste Ärmel eine erste Oberfläche und eine zweite Oberfläche aufweist, wobei die erste Oberfläche Eigenschaften aufweist, wodurch sie durch das interaktive Computerspiel (203) nicht verfolgt werden kann und wobei das erste Verfolgungszeichen (103-107) auf der zweiten Oberfläche angebracht ist; oder
(7) der erste Ärmel vom Hemd abgenommen werden kann, damit ein System entsteht, um das erste Verfolgungszeichen (103-107) zu verstecken oder freizulegen, wobei der erste Ärmel am Hemd so befestigt ist, dass die erste Oberfläche nach außen weist und das erste Verfolgungszeichen (103-107) verbirgt und wobei der erste Ärmel am Hemd so befestigt ist, dass die zweite Oberfläche nach außen weist und das erste Verfolgungszeichen (103-107) freilegt; oder
(8) der erste Ärmel einen Manschettenabschnitt aufweist, wobei der Manschettenabschnitt mittels mindestens eines Überlappungsabschnitts ein System aufweist, um das erste Verfolgungszeichen (103-107) zu verstecken oder freizulegen, wobei der Überlappungsabschnitt mindestens ein Stoffstück und mindestens ein Befestigungselement aufweist und wobei das Stoffstück das erste Verfolgungszeichen (103-107) freilegt, wenn es nach hinten gefaltet und mit dem Befestigungselement befestigt wird; oder
(9) das Kleidungsstück (101) mindestens zwei Materialschichten aufweist, wobei die zwei Materialschichten eine Außenschicht und eine Innenschicht aufweisen, wobei sich die Außenschicht über die Innenschicht erstreckt, wobei die Innenschicht das erste Verfolgungszeichen (103-107) umfasst, wobei die Innenschicht ausgezogen oder eingeschoben werden kann, wobei die ausgezogene Innenschicht die Innenschicht und das erste Verfolgungszeichen (103-107) freilegt und wobei die eingeschobene Innenschicht die Innenschicht und das erste Verfolgungszeichen (103-107) verdeckt; oder
(10) das Kleidungsstück (101) einen ersten Riemen umfasst, wobei der erste Riemen ein lösbares Befestigungselement zum Besfestigen des Kleidungsstücks (101) umfasst, wobei der erste Riemen eine Seite mit und eine Seite ohne ein Verfolgungszeichen aufweist, wobei sich die Seiten der zwei Teile des ersten Riemens mit dem Verfolgungszeichen gegenüberliegen, um das erste Verfolgungszeichen (103-107) zu verbergen und wobei die Seiten der zwei Teile des ersten Riemens ohne das Verfolgungszeichen auf dem Stoff des Kleidungsstücks (101) liegen, um das erste Verfolgungszeichen (103-107) freizulegen.

2. Verfahren zum Anbieten einer interaktiven Spielerfahrung gemäß Anspruch 1, wobei die Erkennungsfunktion umfasst, die Positionen des ersten Verfolgungszeichens zu erkennen, indem zwischen der Farbe des ersten Verfolgungszeichens und einer oder mehreren Farben des Kleidungsstücks (101) unterschieden wird.

3. Verfahren zum Anbieten einer interaktiven Spielerfahrung gemäß Anspruch 1, wobei die Erkennungsfunktion umfasst, die Positionen des ersten Verfolgungszeichens zu erkennen, indem eine Form des ersten Verfolgungszeichens unterschieden wird.

4. Verfahren zum Anbieten einer interaktiven Spielerfahrung gemäß Anspruch 1, wobei die Erkennungsfunktion umfasst, die Positionen des ersten Verfolgungszeichens zu erkennen, indem zwischen dem Eigenreflexionsgrad des ersten Verfolgungszeichens und dem Eigenreflexionsgrad des Kleidungsstücks (101) unterschieden wird.

5. Verfahren eine interaktive Spielerfahrung gemäß Anspruch 1 anzubieten, ferner umfassend:
qualitative Information aus der Bewegung des ersten Verfolgungszeichens zu erkennen, wobei die qualitativen Informationen von einem interaktiven Computerspiel als einer der folgenden Befehle interpretiert werden: Spiel auschalten, Spieltypus oder Spieleigenschaft ändern und alphanumerische Information eingeben; und
einen Spielaspekt ändern, weil aus der Bewegung des ersten Verfolgungszeichens qualitative Information erkannt wurden.

6. System, umfassend:
ein interaktives Computerspiel (203); und
ein mit dem interaktiven Computerspiel (203) verwendetes Kleidungsstück (101), wobei das Kleidungsstück (101) umfasst:
ein Kleidungsstück (101);
ein auf dem Kleidungsstück (101) angebrachtes erstes Verfolgungszeichen (103-107), wobei das erste Verfolgungszeichen (103-107) von einem interaktiven Computerspiel (203) erkannt werden kann; und
ein System, um ein Kleidungsstück (101) zwischen einer verborgenen Konfiguration (bei der das erste Verfolgungszeichen (103-107) durch einen Teil des Kleidungsstücks (101) so verdeckt wird, dass es durch das interaktive Computerspiel (203) nicht mehr verfolgt werden kann) und einer freiliegenden Konfiguration (bei der das erste Verfolgungszeichen (103-107) so freigelegt wird, dass es durch das interaktive Computerspiel (203) verfolgt werden kann) zu wechseln;
**dadurch gekennzeichnet, dass**:
(1) das System zum Wechseln des Kleidungsstücks (101) von einer verdeckten Konfiguration zu einer freiliegenden Konfiguration eine erste Öffnung aufweist, die zwischen einer offenen Position und einer geschlossenen Position konvertierbar ist, wobei die erste Öffnung das erste Verfolgungszeichen (103-107) freigibt, wenn sie geöffnet ist und wobei die erste Öffnung das erste Verfolgungszeichen (103-107) verdeckt, wenn sie geschlossen ist; oder
(2) das System zum Wechseln des Kleidungsstücks (101) von einer verdeckten Konfiguration zu einer freiliegenden Konfiguration mindestens zwei Materialschichten aufweist, wobei die zwei Materialschichten eine Außenschicht und eine Innenschicht aufweisen, wobei sich die Außenschicht über die Innenschicht erstreckt, wobei die Innenschicht das erste Verfolgungszeichen (103-107) umfasst, wobei die Außenschicht ausgerollt bzw. ausgeklappt oder eingerollt bzw. zusammengeklappt werden kann, wobei die ausgerollte bzw. ausgeklappte Außenschicht die Innenschicht und das erste Verfolgungszeichen (103-107) freilegt und wobei die eingerollte bzw. zusammengeklappte Außenschicht die Innenschicht und das erste Verfolgungszeichen (103-107) verdeckt; oder
(3) das System zum Wechseln des Kleidungsstücks (101) von einer verdeckten Konfiguration zu einer freiliegenden Konfiguration eine am ersten Verfolgungszeichen (103-107) befestigte erste Lasche umfasst, wobei die erste Lasche das erste Verfolgungszeichen (103-107) verdeckt oder freilegt, wenn an ihr gezogen wird; oder
(4) das System zum Wechseln des Kleidungsstücks (101) von einer verdeckten Konfiguration zu einer freiliegenden Konfiguration einen am Kleidungsstück befestigten ersten Kordelzug umfasst, wobei der erste Kordelzug das erste Verfolgungszeichen (103-107) verdeckt oder freilegt, wenn an ihm gezogen wird; oder
(5) das System zum Wechseln des Kleidungsstücks (101) von einer verdeckten Konfiguration zu einer freiliegenden Konfiguration einen ersten Reißverschluß aufweist, der zwischen einer offenen Position und einer geschlossenen Position konvertierbar ist, wobei der erste Reißverschluß das erste Verfolgungszeichen (103-107) freigibt, wenn er geöffnet ist und wobei der erste Reißverschluß das erste Verfolgungszeichen (103-107) verdeckt, wenn er geschlossen ist; oder
(6) das Kleidungsstück (101) ein Hemd mit einem ersten Ärmel ist, wobei der erste Ärmel eine erste Oberfläche und eine zweite Oberfläche aufweist, wobei die erste Oberfläche Eigenschaften aufweist, wodurch sie durch das interaktive Computerspiel (203) nicht verfolgt werden kann und wobei das erste Verfolgungszeichen (103-107) auf der zweiten Oberfläche angebracht ist; oder
(7) der erste Ärmel vom Hemd abgenommen werden kann, damit ein System zum Wechseln des Kleidungsstücks (101) von einer verdeckten Konfiguration zu einer freiliegenden Konfiguration entsteht, wobei der erste Ärmel am Hemd so befestigt ist, dass die erste Oberfläche nach außen weist und das erste Verfolgungszeichen (103-107) verbirgt und wobei der erste Ärmel am Hemd so befestigt ist, dass die zweite Oberfläche nach außen weist und das erste Verfolgungszeichen (103-107) freilegt; oder
(8) der erste Ärmel einen Manschettenabschnitt aufweist, wobei der Manschettenabschnitt mittels mindestens eines Überlappungsabschnitts ein System zum Wechseln des Kleidungsstücks (101) von einer verdeckten Konfiguration zu einer freiliegenden Konfiguration aufweist, wobei der Überlappungsabschnitt mindestens ein Stoffstück und mindestens ein Befestigungselement aufweist und wobei das Stoffstück das erste Verfolgungszeichen (103-107) freilegt, wenn es nach hinten gefaltet und mit dem Befestigungselement befestigt wird; oder
(9) das System zum Wechseln des Kleidungsstücks (101) von einer verdeckten Konfiguration zu einer freiliegenden Konfiguration mindestens zwei Materialschichten aufweist, wobei die zwei Materialschichten eine Außenschicht und eine Innenschicht aufweisen, wobei sich die Außenschicht über die Innenschicht erstreckt, wobei die Innenschicht das erste Verfolgungszeichen (103-107) umfasst, wobei die Innenschicht ausgezogen oder eingeschoben werden kann, wobei die ausgezogene Innenschicht die Innenschicht und das erste Verfolgungszeichen (103-107) freilegt und wobei die eingeschobene Innenschicht die Innenschicht und das erste Verfolgungszeichen (103-107) verdeckt; oder
(10) das System zum Wechseln des Kleidungsstücks (101) von einer verdeckten Konfiguration zu einer freiliegenden Konfiguration einen ersten Riemen umfasst, wobei der erste Riemen ein lösbares Befestigungselement zum Befestigen des Kleidungsstücks (101) umfasst, wobei der erste Riemen eine Seite mit und eine Seite ohne ein Verfolgungszeichen aufweist, wobei sich die Seiten der zwei Teile des ersten Riemens mit dem Verfolgungszeichen gegenüberliegen, um das erste Verfolgungszeichen (103-107) zu verbergen und wobei die Seiten der zwei Teile des ersten Riemens ohne das Verfolgungszeichen auf dem Stoff des Kleidungsstücks (101) liegen, um das erste Verfolgungszeichen(103-107) freizulegen.

7. System gemäß Anspruch 6, wobei das interaktive Computerspiel das erste Verfolgungszeichen anhand der Farbe des ersten Verfolgungszeichens erkennen kann.

8. System gemäß Anspruch 6, wobei das interaktive Computerspiel das erste Verfolgungszeichen anhand der Form des ersten Verfolgungszeichens erkennen kann.

9. System gemäß Anspruch 6, wobei das interaktive Computerspiel das erste Verfolgungszeichen anhand des Eigenreflexionsgrads des ersten Verfolgungszeichens erkennen kann.

## Revendications

1. Un procédé de fourniture d'une expérience de jeu interactif sur un dispositif d'activité interactif (203), comprenant :
fournir un article de prêt-à-porter (101) affichant une première marque de suivi (103-107) ;
recevoir des images de l'article de prêt-à-porter (101) ;
reconnaître à partir des images une position de la première marque de suivi (103-107) affichée sur l'article de prêt-à-porter à un premier emplacement ;
reconnaître à partir des images une position de la première marque de suivi (103-107) affichée sur l'article de prêt-à-porter à un second emplacement ; et afficher une action de jeu en réponse à un changement de position de la première marque de suivi (103-107) du premier emplacement au second emplacement,
dans lequel l'article de prêt-à-porter (101) est convertible entre une configuration dissimulée où la première marque de suivi (103-107) est dissimulée par une partie de l'article de prêt-à-porter (101) et une configuration exposée où la première marque de suivi (103-107) est exposée, dans laquelle la première marque de suivi (103-107), lorsqu'elle est dissimulée, ne peut pas être suivie par un jeu informatique interactif (203), et dans laquelle la première marque de suivi (103-107), lorsqu'elle est exposée, peut être suivie par le jeu informatique interactif (203), et
**caractérisé en ce que** :
(1) l'article de prêt-à-porter (101) comprend une première ouverture qui est convertible entre une position ouverte et une position fermée, dans lequel la première ouverture, lorsqu'elle est en position ouverte, expose la première marque de suivi (103-107), et dans lequel la première ouverture, lorsqu'elle est en position fermée, dissimule la première marque de suivi (103-107) ; ou
(2) l'article de prêt-à-porter (101) comprend au moins deux couches de matériau, dans lesquelles au moins deux couches de matériau comprennent une couche externe et une couche interne, dans lesquelles la couche externe s'étend sur la couche interne, dans laquelle la couche interne contient la première marque de suivi (103-107), dans laquelle la couche externe peut être enroulée ou repliée, ou déroulée ou dépliée, et dans laquelle le procédé comprend en outre :
enrouler ou replier la couche externe pour exposer ainsi la couche interne et exposer la première marque de suivi (103-107), et
dérouler ou déplier la couche externe pour ainsi dissimuler la couche interne et dissimuler la première marque de suivi (103-107) ; ou
(3) l'article de prêt-à-porter (101) comprend une première patte fixée à la première marque de suivi (103-107), dans laquelle la première patte, lorsqu'elle est tirée, convertit la première marque de suivi (103-107) d'état dissimulé à un état exposé ; ou
(4) l'article de prêt-à-porter (101) comprend un premier cordon fixé à la pièce d'habillement, dans lequel le premier cordon, lorsqu'il est tiré, convertit la première marque de suivi (103-107) d'état dissimulé à un état exposé ; ou
(5) l'article de prêt-à-porter (101) comprend une première fermeture à glissière qui est convertible entre une position ouverte et une position fermée, dans laquelle la première fermeture à glissière, en position ouverte, expose la première marque de suivi (103-107), et dans laquelle la première fermeture à glissière, en position fermée, dissimule la première marque de suivi (103-107) ; ou
(6) l'article de prêt-à-porter (101) est une chemise qui comprend un premier manchon, dans lequel le premier manchon a une première surface et une seconde surface, dans laquelle la première surface a des propriétés qui ne peuvent pas être suivies par le jeu informatique interactif (203), et dans laquelle la seconde surface comprend la première marque de suivi (103-107) ; ou
(7) le premier manchon est détachable de la chemise pour ainsi fournir un système en vue de convertir la première marque de suivi (103-107) entre un état dissimulé et un état exposé, dans lequel le premier manchon est attaché à la chemise avec la première surface tournée vers l'extérieur pour dissimuler la première marque de suivi (103-107) ; et dans lequel le premier manchon est attaché à la chemise avec la seconde surface tournée vers l'extérieur afin d'exposer la première marque de suivi (103-107) ; ou
(8) le premier manchon présente une zone de revers, dans laquelle la zone de revers procure un système de conversion de la première marque de suivi (103-107) entre un état dissimulé et un état exposé en procurant au moins une section de chevauchement, dans laquelle au moins une section de chevauchement comprend une pièce de matériau et au moins une attache, et dans laquelle la pièce de matériau, lorsqu'elle est repliée vers l'arrière et fixée à l'aide d'au moins une attache, expose la première marque de suivi (103-107) ; ou
(9) l'article de prêt-à-porter (101) comprend au moins deux couches de matériau, dans lesquelles au moins deux couches de matériau comprennent une couche externe et une couche interne, dans laquelle la couche externe s'étend sur la couche interne, dans laquelle la couche interne contient le première marque de suivi (103-107), dans laquelle la couche interne peut être étirée ou rétractée, dans laquelle la couche interne, lorsqu'elle est étirée, expose la couche interne et expose la première marque de suivi (103-107) et dans laquelle la couche interne, lorsqu'elle est rétractée, dissimule la couche interne et dissimule la première marque de suivi (103-107) ; ou
(10) l'article de prêt-à-porter (101) comprend une première sangle, dans laquelle la première sangle comprend une fixation amovible pour la fixer à l'article de prêt-à-porter (101), dans laquelle la première sangle comprend un côté avec une marque de suivi et un côté sans marque de suivi, dans lesquels deux parties de la première sangle ont leurs côtés contenant la marque de suivi situés l'un en face de l'autre pour dissimuler la première marque de suivi (103-107), et dans lesquels les deux parties de la première sangle ont les côtés sans marque de suivi opposant un matériau de l'article de prêt-à-porter (101) pour exposer la première marque de suivi (103-107).

2. Le procédé de fourniture d'une expérience de jeu interactif énoncé dans la revendication 1, dans lequel la reconnaissance comprend la reconnaissance des positions de la première marque de suivi en distinguant une couleur de la première marque de suivi d'une ou plusieurs couleurs de l'article de prêt-à-porter (101).

3. Le procédé de fourniture d'une expérience de jeu interactif énoncé dans la revendication 1, dans lequel la reconnaissance comprend la reconnaissance des positions de la première marque de suivi en distinguant une forme de la première marque de suivi.

4. Le procédé de fourniture d'une expérience de jeu interactif énoncé dans la revendication 1, dans lequel la reconnaissance comprend la reconnaissance des positions de la première marque de suivi en distinguant une réflectivité de la première marque de suivi d'une réflectivité de l'article de prêt-à-porter (101).

5. Le procédé de fourniture d'une expérience de jeu interactif énoncé dans la revendication 1, comprenant en outre :
la reconnaissance d'informations qualitatives provenant du mouvement de la première marque de suivi, dans laquelle les informations qualitatives sont interprétées par un jeu informatique interactif comme une instruction sélectionnée parmi le groupe constitué de : une instruction pour éteindre le jeu, une instruction pour changer un mode ou une caractéristique du jeu, et une instruction pour entrer des informations alphanumériques ; et
le changement d'un aspect du jeu en réponse à la reconnaissance des informations qualitatives provenant du mouvement de la première marque de suivi.

6. Un système comprenant :
un jeu informatique interactif (203) ; et
un article de vêtement (101) agencé pour être utilisé avec le jeu informatique interactif (203), l'article de vêtement (101) comprenant :
un article de prêt-à-porter (101) ;
une première marque de suivi (103-107) incluse sur l'article de prêt-à-porter (101), la première marque de suivi (103-107) étant reconnaissable par un jeu informatique interactif (203) ; et
un système de conversion de l'article de prêt-à-porter (101) entre une configuration dissimulée où la première marque de suivi (103-107) est dissimulée par une partie de l'article de prêt-à-porter (101) de telle sorte qu'elle ne peut pas être suivie par le jeu informatique interactif (203) et une configuration exposée où la première marque de suivi (103-107) est exposée de sorte qu'elle peut être suivie par le jeu informatique interactif (203), **caractérisé en ce que** :
(1) le système de conversion de l'article de prêt-à-porter (101) entre la configuration dissimulée et la configuration exposée comprend une première ouverture qui est convertible entre une position ouverte et une position fermée, dans laquelle la première ouverture, en position ouverte, expose la première marque de suivi (103-107), et dans laquelle la première ouverture, en position fermée, dissimule la première marque de suivi (103-107) ; ou
(2) le système de conversion de l'article de prêt-à-porter (101) entre la configuration dissimulée et la configuration exposée comprend au moins deux couches de matériau, dans lesquelles au moins deux couches de matériau comprennent une couche externe et une couche interne, dans laquelle la couche externe s'étend sur la couche interne, dans laquelle la couche interne contient la première marque de suivi (103-107), dans laquelle la couche externe peut être enroulée ou repliée, ou déroulée ou dépliée, dans laquelle la couche externe, lorsqu'elle est enroulée ou repliée, expose la couche interne et expose la première marque de suivi (103-107), et dans laquelle la couche externe, lorsqu'elle est déroulée ou dépliée, dissimule la couche interne et dissimule la première marque de suivi (103-107) ; ou
(3) le système de conversion de l'article de prêt-à-porter (101) entre la configuration dissimulée et la configuration exposée comprend une première patte fixée à la première marque de suivi (103-107), dans laquelle la première patte, lorsqu'elle est tirée, convertit la première marque de suivi (103-107) d'un état dissimulé à un état exposé ; ou
(4) le système de conversion de l'article de prêt-à-porter (101) entre la configuration dissimulée et la configuration exposée comprend un premier cordon attaché à la pièce d'habillement, dans laquelle le premier cordon, lorsqu'il est tiré, convertit la première marque de suivi (103-107) d'un état dissimulé à un état exposé ; ou
(5) le système de conversion de l'article de prêt-à-porter (101) entre la configuration dissimulée et la configuration exposée comprend une première fermeture à glissière qui est convertible entre une position ouverte et une position fermée, dans laquelle la première fermeture à glissière, en position ouverte, expose la première marque de suivi (103-107), et dans laquelle la première fermeture à glissière, en position fermée, dissimule la première marque de suivi (103-107) ; ou
(6) l'article de prêt-à-porter (101) est une chemise qui comprend un premier manchon, dans lequel le premier manchon a une première surface et une seconde surface, dans lequel la première surface a des propriétés qui ne peuvent pas être suivies par le jeu informatique interactif (203), et dans lequel la seconde surface comprend la première marque de suivi (103-107) ; ou
(7) le premier manchon est détachable de la chemise pour fournir ainsi un système de conversion de l'article de prêt-à-porter (101) entre la configuration dissimulée et la configuration exposée, dans lequel le premier manchon est attaché à la chemise avec la première surface tournée vers l'extérieur afin de dissimuler la première marque de suivi (103-107) ; et dans lequel le premier manchon est attaché à la chemise avec la seconde surface tournée vers l'extérieur pour exposer la première marque de suivi (103-107) ; ou
(8) le premier manchon présente une zone de revers, dans laquelle la zone de revers constitue un système de conversion de l'article de prêt-à-porter (101) entre la configuration dissimulée et la configuration exposée en prévoyant au moins une section de chevauchement, dans laquelle au moins une section de chevauchement comprend une pièce de matériau et au moins une attache, et dans laquelle la pièce de matériau, lorsqu'elle est repliée vers l'arrière et fixée à l'aide d'au moins une attache, expose la première marque de suivi (103-107) ; ou
(9) le système de conversion de l'article de prêt-à-porter (101) entre la configuration dissimulée et la configuration exposée comprend au moins deux couches de matériau, dans lesquelles au moins deux couches de matériau comprennent une couche externe et une couche interne, dans lesquelles la couche externe s'étend sur la couche interne, dans lesquelles la couche interne contient la première marque de suivi (103-107), dans lesquelles la couche interne peut être étirée ou rétractée, dans lesquelles la couche interne, lorsqu'elle est étirée, expose la couche interne et expose la première marque de suivi (103-107), et dans laquelle la couche interne, lorsqu'elle est rétractée, dissimule la couche interne et dissimule la première marque de suivi (103-107) ; ou
(10) le système de conversion de l'article de prêt-à-porter (101) entre la configuration dissimulée et la configuration exposée comprend une première sangle, dans laquelle la première sangle comprend une fixation amovible à fixer à l'article de prêt-à-porter (101), dans laquelle la première sangle comprend un côté avec marque de suivi et un côté sans marque de suivi, dans lesquels deux parties de la première sangle présentent leurs côtés avec marque de suivi situés l'un en face de l'autre pour dissimuler la première marque de suivi (103-107), et dans lesquels les deux parties de la première sangle présentent les côtés sans marque de suivi opposant un matériau de l'article de prêt-à-porter (101) pour exposer la première marque de suivi (103-107).

7. Le système énoncé dans la revendication 6, dans lequel la première marque de suivi est reconnaissable par le jeu informatique interactif sur la base de la couleur de la première marque de suivi.

8. Le système énoncé dans la revendication 6, dans lequel la première marque de suivi est reconnaissable par le jeu informatique interactif sur la base d'une forme de la première marque de suivi.

9. Le système énoncé dans la revendication 6, dans lequel la première marque de suivi est reconnaissable par le jeu informatique interactif sur la base d'une réflectivité de la première marque de suivi.
